# EUROPEAN PATENT APPLICATION

(11) **EP 4 186 367 A1**
(43) Date of publication of application: **31.05.2023**
(21) Application number: 21306671.5
(22) Date of filing: 30.11.2021
(51) Int. Cl.: A01N 43/16, A01N 65/08, A01P 3/00

(54) **COMPOSITIONS AND METHODS FOR CONTROLLING PHYTOPATHOGENIC INFECTIONS**

(71) Applicant: Institut national de recherche pour l'agriculture, l'alimentation et l'environnement (INRAE), 75007 Paris (FR); AGROCAMPUS OUEST (Institut national supérieur des sciences agronomiques, agro-alimentaires, horticoles et du paysage), 35000 Rennes (FR); Université d'Angers, 49000 Angers (FR)
(72) Inventor: BATAILLÉ-SIMONEAU, Nelly, 49370 St Clément de la Place (FR); CHARPENTIER, Thomas, 49100 Angers (FR); GUILLEMETTE, Thomas, 49240 Avrillé (FR); Le RAY, Anne-Marie, 49000 Angers (FR); RICHOMME-PENIGUEL, Pascal, 49000 Angers (FR); SIMONEAU, Philippe, 49370 St Clément de la Place (FR); VIAULT, Guillaume, 49460 Montreuil-Juigné (FR)
(74) Representative: Icosa

(57) **Abstract**

The present invention relates to a phytopharmaceutical method for treating a plant organ affected by a phytopathogenic fungal strain, said method comprising the steps of applying on the plant organ a composition comprising at least one UPR (Unfolded Protein Response) inhibitor, preferably, an IRE-1 (Inositol-Requiring Enzyme 1) inhibitor, in a sub-effective amount. The invention further relates to a phytopharmaceutical composition comprising at least one UPR (Unfolded Protein Response) inhibitor in a sub-effective amount.

## Description

### FIELD OF INVENTION

The present invention relates to a composition and a method aiming at preventing, controlling and/or treating plant organ infections by a phytopathogenic fungal strain.

### BACKGROUND OF INVENTION

Phytopathogenic fungi may affect a variety of plant organs, such as leaves, stems, fruits and seeds. Infected plant fruits are usually unfitted for sale, and an infection of leaves or seeds may alter plant development or germination, causing significant reduction of productivity. Therefore, fungal infections may result in substantial economic losses. The control of fungal infections of crops is thus a major economic issue.

Plant diseases result in an annual estimated loss of 10-15% of the world's major crops, with direct economic losses of up to hundreds of billions of dollars. Among the plant diseases, about 70 to about 80% are caused by pathogenic fungi (Peng et al. Front Microbiol. 2021; 12: 670135).

In order to prevent the occurrence of such crop diseases, farmers have to use many synthetic chemical pesticides. The extensive use of these pesticides has resulted in a series of environmental and ecological problems, such as for example soil compaction, and water pollution, which seriously affect the sustainable development of agriculture (Peng et al. Front Microbiol. 2021; 12: 670135). Therefore, the conventional chemical fungicides commonly used to protect crops against fungal infection present the drawback to be highly pollutant for the environment, especially for soil and water supply. Moreover, these products may be toxic for humans.

The international application WO2014012766 discloses the use of Serine/Threonine Protein Kinase C inhibitors in the prevention and/or treatment of phytopathogenic fungal infections. However, in recent years, fungal diseases of crops have become increasingly serious as they have severely affected crop yield and quality, and they have become an important bottleneck for the development of sustainable agriculture.

There is thus a need for supplying new environment-respectful fungicidal compositions and methods in order to enrich the agricultural weaponry against phytopathogenic fungal strains.

The inventors surprisingly found that natural products as hereinafter described may exert an antifungal effect by acting on the Unfolded Protein Response (UPR) pathway once applied on a plant organ. Even more surprisingly, the antifungal effect is presented when the composition according to the invention is applied in a sub-effective amount.

### SUMMARY

The present invention relates to a method for preventing, controlling or treating a fungal infection by a phytopathogenic fungal strain on a plant organ, said method comprising the steps of applying on the plant organ a composition comprising at least one UPR (Unfolded Protein Response) inhibitor, preferably an IRE-1 (Inositol-Requiring Enzyme 1) inhibitor, in an *in vitro* sub-effective concentration. The *in vitro* sub-effective concentration is a concentration equal or inferior to a non-fungicidal concentration C1 of said inhibitor against the phytopathogenic fungal strain that can be determined by comparing the growth of the phytopathogenic fungal strain cultures in contact with increasing concentrations of said at least one UPR inhibitor, with the growth of a control culture of the phytopathogenic fungal strain, in the absence of said at least one UPR inhibitor; the last concentration of the increasing concentrations of the at least one UPR inhibitor resulting in the same fungal culture growth as the control culture being retained as the non-fungicidal concentration C1 of said at least one UPR inhibitor.

According to one embodiment, the at least one UPR inhibitor is at least one xanthone of formula I 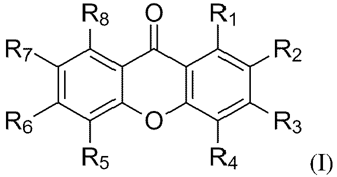 wherein each independently of R1-R8 is selected from H, OH, alkenyl, or *O*-β-D-glucopyranose, with the proviso that at least one alkenyl moiety is in *ortho* position with at least one OH moiety.

In one embodiment, the at least one UPR inhibitor is selected from the group consisting of γ-mangostin, 1,3,5 trihydroxy-4-prenylxanthone, 1,3,5 trihydroxy-2-prenylxanthone and a mixture thereof,

In one specific embodiment, the at least one UPR inhibitor is comprised in a *Garcinia mangostana* leaf, bark or pericarp extract.

According to one embodiment, the method further comprises applying on the plant organ at least one at least one PKc (Serine/Threonine Protein Kinase C) inhibitor, wherein the at least one at least one PKc inhibitor is applied simultaneously and/or sequentially to the composition comprising at least one UPR (Unfolded Protein Response) inhibitor. In one embodiment, the at least one PKc inhibitor is in a sub-effective amount, said sub-effective amount being a concentration equal or inferior to a non-fungicidal concentration C2; wherein the non-fungicidal concentration C2 is determined by comparing the growth of the phytopathogenic fungal strain cultures in contact with increasing concentrations of said at least one PKc inhibitor, with the growth of a control culture of the phytopathogenic fungal strain, in the absence of said at least one PKc inhibitor; the last concentration of the increasing concentrations of the at least one PKc inhibitor resulting in the same fungal culture growth as the control culture being retained as the non-fungicidal concentration C2 of said at least one PKc inhibitor.

Such PKc inhibitor may be selected from the group consisting of chelerythrin, sanguinarin, berberin, coptisin and a mixture thereof. In one embodiment, the at least one PKc inhibitor is an extract of *Macleaya cordata.*

In one exemplary embodiment, the fungal infection to be prevented, controlled or treated by the present method is an infection by a phytopathogenic fungus selected from the group consisting of the genera *Alternaria, Fusarium, Botrytis or Botryotinia, Sclerotinia, Dreschlera, Venturia, Hyaloperonospora, Plasmodiophora, Phoma, Erysiphe, Rhizoctonia, Pythium, Cercospora, Podosphaera, Gymnosporangium, Pythopthora, Plasmopara, Uncinula, Guignardia, Eutypa, Phomopsis, Botryosphaeria, Zymospetoria, Puccinia, Blumeria, Oculimacula, Gaeumannomyces, Pyrenophora, Phakospora, Septoria, Peronospora, Colletotrichum, Microsphaera, Corynespora, Helminthosporium, Pyricularia, Rhizoctonia, Sarocladium, Erythricium, Mycospharella, Urocystis, Monilinia, Taphrina, Cladosporium, Cytospora, Phomopsis, Cercosporidium, Phoma* and *Leptosphaerulina,* and/or the infected plant organ is a plant organ of the Brassicacae, Apiaceae, Vitaceae, Rosaceae, Solanaceae, Fabaceae, Poaceae, Musaceae, Fabaceae, Alliaceae, Rutaceae and Sterculiaceae families.

In one embodiment, the method further comprises applying on the plant organ simultaneously and/or sequentially to the composition comprising at least one UPR inhibitor, at least one agent for stimulating the synthesis of a plant defense molecule; said agent being selected from the group consisting of acibenzolar-S-methyl, chitosan, laminarin, *Reynoutria Sachalinensis* extract, calcium prohexadione, harpine, yeast wall extracts, oligogalacturonides, calcium phosphonate, disodium phosphonate 24-Epibrassinolide, ABE-IT 56 (Yeast Extract), Cerevisane, Chito-oligosaccharides, Oligogalacturonides, Heptamaloxyloglucan, Pepino mosaic virus strain CH2 isolate 1906, *Pythium oligandrum* strain B301 and a mixture thereof.

The composition may optionally further comprise at least synthetic or mineral phytopharmaceutical fungistatic or fungicide agent.

The invention further relates to a phytopharmaceutical composition against a phytopathogenic fungal strain comprising at least one UPR (Unfolded Protein Response) inhibitor in a sub-effective amount, said sub-effective amount being a concentration equal or inferior to a non-fungicidal concentration of said inhibitor against the phytopathogenic fungal strain, in association with at least one phytopharmaceutical vehicle.

The at least one UPR inhibitor is typically at least one xanthone of formula I 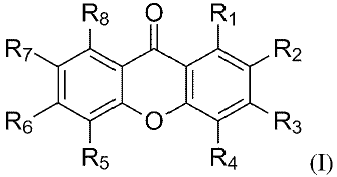 wherein each independently of R1-R8 is selected from H, OH, alkenyl, or *O*-β-D-glucopyranose, with the proviso that at least one alkenyl moiety is in *ortho* position with at least one OH moiety;
and the sub-effective amount is typically less than about 1000 ppm and/or less than or equal to 3.10 mM, preferably less than or equal to 2.52 mM, even more preferably less than or equal to 2.43 mM.

The phytopharmaceutical composition may further comprise at least one PKc inhibitor selected from the group consisting of chelerythrin, sanguinarin, berberin, coptisin and a mixture thereof and/or at least one agent for stimulating the synthesis of a plant defense molecule; said agent being selected from the group consisting of acibenzolar-S-methyl, chitosan, laminarin, *Reynoutria Sachalinensis* extract, calcium prohexadione, harpine, yeast wall extracts, oligogalacturonides, calcium phosphonate, disodium phosphonate and a mixture thereof.

The invention also relates to a kit-of-parts comprising a first part comprising at least one UPR (Unfolded Protein Response) inhibitor in a sub-effective amount as described in phytopharmaceutical composition according to the invention, a second part comprising least one phytopharmaceutical vehicle; and optionally a third part comprising at least one PKc inhibitor selected from the group consisting of chelerythrin, sanguinarin, berberin, coptisin and a mixture thereof and/or a fourth part comprising at least one agent for stimulating the synthesis of a plant defense molecule selected from the group consisting of acibenzolar-S-methyl, chitosan, laminarin, *Reynoutria Sachalinensis* extract, calcium prohexadione, harpine, yeast wall extracts, oligogalacturonides, calcium phosphonate and a mixture thereof.

### DEFINITIONS

In the present invention, the following terms have the following meanings:
**"About"** preceding a figure means more or less 10% of the value of said figure.

**"Agent for stimulating the production of a plant defense molecule"** or **"elicitor"** refers to a compound that, when applied on a plant organ, leads to biochemical and/or physiologic cell reactions resulting in the synthesis, or to an increase of the synthesis of a plant defense molecule, such as, for example, a phytoalexin. Said agents may also be referred to as "natural defense stimulators". Agents for stimulating the synthesis of a plant defense molecule are known in the prior art, and may be of natural (animal, vegetal or mineral) or synthetic origin. When these agents contact the plant organ, the plant defense signaling pathways are triggered, leading to the activation of the plant defense mechanisms. In that manner, plant defense molecules that are secreted may exert a synergistic effect with the composition of the present invention.

**"Alkenyl":** refers to any linear or branched hydrocarbon chain having at least one double bond, of 2 to 15 carbon atoms. In one embodiment, the alkenyl is selected from methylene, ethylene, propylene, isopropylene, n-butylene, sec-butylene, isobutylene, tertbutylene, 2-methylpent-2-en-yl (also referred to as prenyl) and polymerized prenyl chains typically prenyl dimers and/or prenyl trimers.

**"Alkyl":** refers to any saturated linear or branched hydrocarbon chain, with 1 to 12 carbon atoms, preferably 1 to 6 carbon atoms, and more preferably methyl, ethyl, propyl, isopropyl, n-butyl, sec-butyl, isobutyl and tert-butyl.

**"Phytopharmaceutically effective amount"** refers to the amount of an agent necessary and sufficient for, without causing significant negative or adverse side effects to the plant organ, (i) preventing a fungal infection, (ii) slowing down or stopping the progression, aggravation or deterioration of one or more symptoms of the fungal infection; (iii) alleviating said symptoms and/or (iv) eliminating fungal contamination. Advantageously, the phytopharmaceutically effective amount is a sub-effective amount *in vitro,* typically a non-fungicidal-amount, *in vitro.*

**"Controlling"** means stopping the progression of the fungal infection, and preventing its spread across the healthy parts of the plant organ. In one embodiment, controlling refers to reducing the incidence a phytopathogenic infection, meaning decreasing the number of infected plant organs in a plant culture. In one embodiment, controlling refers to preventing the propagation of the fungal contamination from one plant to another plant of the same plant culture. In one embodiment, controlling refers to reducing the severity of a phytopathogenic infection, meaning decreasing the percentage of the infected surface (*i. e.* decolorized or necrotic surface) relative to the total plant organ surface.

**"Preventing"** means avoiding occurrence of at least one adverse effect or symptom of a fungal infection.

**"Treating"** means eliminating fungal contamination, i.e. that there is no viable fungus in the plant organ anymore.

**"Phytosanitary or phytopharmaceutical products"** refers to active substances and preparations containing one or more active substances, intended to protect plant organs against a harmful organism or prevent the action of a harmful organism on plant organs.

**"Phytopharmaceutical vehicle"** refers to a vehicle that does not produce an adverse or other untoward reaction when applied on a plant organ. An example of phytopharmaceutical vehicle includes, but is not limited to, water.

**"Plant organ"** refers to a plant, a part of plant or a plant propagation material. Examples of plant organs include, but are not limited to, whole plants, leaves, stems, fruits, seeds, plants, part of plants, cuttings, tubers, roots, bulbs, rhizomes and the like.

**"Synergistic effect":** defines the interaction of two or more agents acting together in a positive way to produce an effect in an amount that they could not separately reach. An **"additive synergy"** defines a synergy wherein the combined effect of the agents is equal to the sum of the effects of each agent alone. When the combined effect is greater than the sum of the effects of each agent operating by itself, the synergy is referred to as a **"potentiating effect".** In one embodiment, the synergistic effect is an additive synergy. In another embodiment, the synergistic effect is a potentiating effect.

**"Sub-effective amount"** refers to the amount or the concentration of a compound/composition that does not exert a fungistatic and/or fungicidal effect. In one embodiment, the sub-effective amount refers to the *in vitro* sub-effective amount. In the context of the present specification the term amount may also designate concentration. As used herein, a **"fungistatic effect"** refers to an inhibiting and/or stopping and/or controlling effect upon the growth and/or development of fungi without destroying them, whereas a **"fungicidal effect"** refers to the destruction of fungi. In one typical embodiment, the sub-effective amount is a **"non-fungicidal amount"** that represents an amount (alternatively expressed as concentration) necessary to alter and/or inhibit the signaling pathways involved in the growth, stress-response and/or development of fungi, said amount being lower than a fungicidal amount. The non-fungicidal amount does not exert a fungicidal effect in vitro, and is lower than the in vitro fungicidal amount. In one typical embodiment, the sub-effective amount is a **"non-fungistatic amount"** that represents an amount (alternatively expressed as concentration) necessary to alter and/or inhibit the signaling pathways involved in the growth, stress-response and/or development of fungi, said amount being lower than a fungistatic amount. The non-fungistatic amount does not exert a fungistatic effect in vitro, and is lower than the in vitro fungistatic amount that typically is itself lower than the in vitro fungicidal amount. Methods for determining the sub-effective amount, typically the non-fungicidal amount of a product are well known from the skilled artisan. Examples of such methods include, but are not limited to, growth test in presence of increasing concentrations of said product, which may be carried out in culture in liquid or solid medium.

### DETAILED DESCRIPTION

According to a first aspect, the invention relates to a method for treating a plant organ, said method comprising the step of applying on the plant organ a composition comprising at least one inhibitor of the Unfolded Protein Response (UPR) signalization pathway (designated hereinafter as at least one UPR inhibitor), in a sub-effective amount.

As used herein, a **"signalization pathway"** refers to a network of proteins acting together to control one or more cell functions. After the first molecule of the pathway has received a signal, it activates another molecule. This process is repeated until the last molecule is activated and the cell function involved is carried out. One example of signalization pathway includes as a first molecule a transmembrane receptor, then a set of kinases, and at last a transcription factor.

Accordingly, an **"inhibitor of a signalization pathway"** is a compound that limits, prevents or stops the activation of anyone of the proteins of a signalization pathway, resulting in the incapacity of the pathway to control the cell function it usually controls. Referring to the example of the preceding paragraph, an inhibitor may act, without limitation, on the transmembrane receptor (for example, the inhibitor may be an agonist of said receptor), on the catalytic activity of a kinase (for example, the inhibitor may be a catalytic inhibitor of the enzymatic activity of the kinase) or may prevent the action of the transcription factor.

The UPR pathway is a stress signalization pathway involved in the cellular development and environmental adaptation in fungi, such as for example once they have been exposed to plant defense molecules. The UPR pathway is involved in regulating the folding, yield, and delivery of secretory proteins and that has consequences on the fungal stress response as well as on its virulence. This pathway is more particularly involved in maintaining the Endoplasmic Reticulum (ER) homeostasis. maintaining the fidelity of the protein folding activities of the endoplasmic reticulum (ER). Dysregulation of the UPR pathway may lead to a dysregulation of the protein homeostasis, also known as proteotoxic stress.

Proteins of the UPR pathway include, but are not limited to, endoribonuclease IRE1 (Inositol-Requiring Enzyme 1), transcription factor Hac1, and homologs of these proteins in filamentous fungi. Names of genes and proteins herein presented correspond to the genes and proteins of *Saccharomyces cerevisiae.* The skilled artisan knows how to identify the corresponding genes and proteins in another species of fungus.

Since aberrant polypeptides are deleterious to the cell, they are disposed of through ER-associated degradation (ERAD), a pathway that works in conjunction with the UPR to relieve the burden of unfolded proteins on the ER. ERAD recognizes unfolded proteins and escorts them through a channel in the ER membrane into the cytosol, where they are targeted for proteasomal degradation.

In one embodiment of the invention, the inhibitor of the UPR pathway is an inhibitor of the endoribonuclease IRE1 and/or of the transcription factor Hac1.

In one typical embodiment, the at least one UPR inhibitor is an inhibitor of Ire1. IRE1 is an ER membrane protein with a luminal stress sensing domain and a cytosolic effector domain that contains a protein kinase domain linked to an endoribonuclease (RNase). When unfolded protein levels are low, Ire1 is bound to the ER-resident Hsp70 chaperone BiP, which helps to maintain Ire1 in an inactive state. The presence of high levels of unfolded proteins triggers dissociation of BiP from Ire1, allowing for Ire1 oligomerization and trans-autophosphorylation. These events alter the conformation of Ire1, which activates the RNase domain leading to the destruction of aberrant proteins.

Without willing to be bound by a theory, applying the at least one UPR inhibitor according to the present invention leads to the blockade of the fungal stress resistance mechanisms that are triggered in response to the plant's defensive mechanisms and/or the effects of a phytopharmaceutical antifungal active agent as described herein above. Advantageously, the at least one UPR inhibitor, typically the at least one IRE1 inhibitor, is in a sub-effective amount or concentration as defined hereinabove.

It should be understood that, although the at least one UPR inhibitor is applied in an *in vitro* sub-effective amount, surprisingly it is effective *in planta.* In other terms, it was surprisingly found that the *in vitro* sub-effective amount of the at least one UPR inhibitor according to the invention is a phytopharmaceutically effective amount.

In one embodiment of the invention, the fungistatic or fungicidal effect is measured after at least 5 hours of culture, preferably at least 10 hours, more preferably at least 20 hours, and even more preferably at least 30 hours.

In one embodiment of the invention, the fungistatic or fungicidal effect is assessed by comparing growth of treated fungi with growth of untreated fungi (controls cultured in the absence of the tested product).

One example of such a method may be the following test:
Suspensions of fungal conidia (starting material being for example 10⁵ conidia/mL) are cultured in liquid medium, such as, for example, 300 µL of PBD medium, on microplate wells at 25°C with shaking at 175 rpm for 5 minutes every 10 minutes. Increasing concentrations of the tested product are added on wells, and fungal growth is measured, during at least 5 hours, preferably at least 10, 20, 30 hours. Methods for measuring fungal growth are well known from the skilled artisan. Examples of such methods include, but are not limited to, photometry, such as, for example, spectrophotometric methods; or nephelometry, such as, for example, laser nephelometry as described in Joubert et al (Biotechniques, 2010, 48:399-404). Growth inhibition is measured by comparing the Area Under Curves (AUC) of treated samples and of untreated controls.

In one embodiment, the sub-effective *in vitro* concentration is a concentration equal or inferior to a non-fungicidal concentration C1 of the at least one UPR inhibitor against a phytopathogenic fungal strain.

The non-fungicidal concentration C1 is determined by comparing the growth of the phytopathogenic fungal strain cultures in contact with increasing concentrations of said at least one UPR inhibitor, with the growth of a control culture of the phytopathogenic fungal strain, in the absence of said at least one UPR inhibitor; the last concentration of the increasing concentrations of the at least one UPR inhibitor resulting in a substantially identical fungal culture growth as the control culture being retained as the non-fungicidal concentration C1 of said at least one UPR inhibitor. In one embodiment, substantially identical designates the same fungal culture growth as the control culture. In one embodiment, the non-fungicidal concentration C1 does not exert more than 20% fungal growth inhibition compared to fungal growth of the control culture.

In order to attenuate bioavailability obstacles such as plant organ permeability regarding the at least one UPR inhibitor, the amount of the at least one UPR inhibitor may be adapted from about 1% to about 20%, or from about 5% to about 20% relative to the *in-vitro* determined non-fungicidal amount. Thus, in one embodiment, substantially identical fungal culture growth designates a more or less 5% fungal culture growth compared to the control culture. In one embodiment, substantially identical fungal culture growth designates a more or less 10% fungal culture growth compared to the control culture. In one embodiment, substantially identical fungal culture growth designates a more or less 15% fungal culture growth compared to the control culture. In one embodiment, substantially identical fungal culture growth designates a more or less 20% fungal culture growth compared to the control culture.

In some embodiments, the sub-effective amount or concentration is as described in each one of the following embodiments defining UPR inhibitors.

In an embodiment, the at least one UPR inhibitor, typically the at least one IRE1 inhibitor, comprises a moiety of formula (I'): 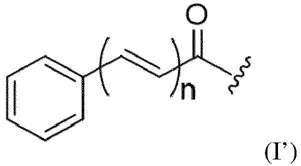 wherein n is 0 or 1, and wherein each position of the phenyl group may be substituted and/or part of a cycle.

In one embodiment, the at least one UPR inhibitor, typically the at least one IRE 1 inhibitor, is at least one xanthone.

Xanthones or xanthonoids designate the compounds having 9*H*-Xanthen-9-one as a scaffold. Over 200 natural xanthones have been identified as natural products. Xanthones have been reported in plants of the non-exhaustive list of the families Bonnetiaceae, Clusiaceae, and Podostemaceae.

Xanthone compounds are typically represented by compounds of formula (I) 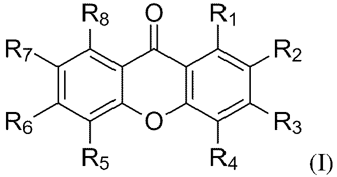 wherein each independently of R1, R2, R3, R4, R5, R6, R7 and R8 is selected from H, OH, alkenyl, alkyl, alkyl-oxy, and/or *O*-β-D-glucopyranose. Typically, alkenyl may be prenyl or genanyl. In some cases, the prenyl moiety may form with an *ortho* positioned hydroxyl (OH) moiety a five-membered ring or a six-membered ring, such as a 2,3,3-trimethyltetrahydrofuran ring, a 2,2-dimethyldihydropyrane ring, or a 2,2-dimethyldihydropyrane ring. As established by the organic chemistry IUPAC nomenclature, in *ortho*-substitution, two substituents occupy positions next to each other.

The inventors found that xanthones of formula (I) can inhibit the UPR pathway provided that they present at least one hydroxyl moiety in *ortho* position with at least one alkenyl moiety.

Thus, in one embodiment, the at least one UPR inhibitor is at least one xanthone of formula (I) wherein each independently of R1, R2, R3, R4, R5, R6, R7 and R8 is selected from H, OH, alkenyl, alkyl, alkyl-oxy, and/or *O*-β-D-glucopyranose, with the proviso that at least one of R1-R8 is OH, at least one of R1-R8 is alkenyl and said at least one OH and at least one alkenyl are in *ortho* position. In other terms, the at least one UPR inhibitor is at least one xanthone of formula (I) wherein each independently of R1, R2, R3, R4, R5, R6, R7 and R8 is selected from H, OH, alkenyl, alkyl, alkyl-oxy, and/or O-β-D-glucopyranose, with the proviso that at least one alkenyl moiety is in *ortho* position with at least one OH moiety.

In one embodiment, each independently of R1, R2, R3, R4, R5, R6, R7 and R8 is selected from H, OH, alkenyl, and/or alkyl-oxy.

In one typical embodiment, alkenyl is selected from prenyl or geranyl. In one embodiment, alkenyl is prenyl. In one embodiment, alkenyl is geranyl. In one embodiment, alkyl-oxy is methoxy.

In some embodiments, each independently of R1, R2, R3, R4, R5, R6, R7 and R8 is selected from H, OH, alkenyl, typically prenyl, geranyl, and/or alkyl-oxy, typically methyl-oxy.

In one typical embodiment, each independently of R1, R2, R3, R4, R5, R6, R7 and R8 is selected from H, OH, and/or alkenyl.

In one embodiment, each independently of R1, R2, R3, R4, R5, R6, R7 and R8 is selected from H, OH, prenyl, and/or geranyl.

In one embodiment, each independently of R1, R2, R3, R4, R5, R6, R7 and R8 is selected from H, OH, and/or prenyl.

According to one embodiment, each independently of R1, R2, R3, R4, R5, R6, R7 and R8 is selected from H, OH, alkenyl, alkyl, alkyl-oxy, and/or *O*-β-D-glucopyranose; preferably selected from H, OH, alkenyl, and/or alkyl-oxy, typically selected from H, OH, and/or alkenyl; and wherein:
- R1 is OH, and R2 is alkenyl, preferably selected from prenyl and geranyl; and/or
- R2 is hydroxyl, R1 and/or R3 is alkenyl, preferably selected from prenyl and geranyl; and/or
- R3 is OH, R2 and/or R4 is alkenyl, preferably selected from prenyl and geranyl; and/or
- R4 is OH, and R3 is alkenyl, preferably selected from prenyl and geranyl; and/or
- R5 is OH, and R6 is alkenyl, preferably selected from prenyl and geranyl; and/or
- R6 is OH, R5 and/or R7 is alkenyl, preferably selected from prenyl and geranyl; and/or
- R7 is OH, R6 and/or R8 is alkenyl, preferably selected from prenyl and geranyl; and/or
- R8 is OH, R2 and/or R4 is alkenyl, preferably selected from prenyl and geranyl.

According to some embodiments, the prenyl moiety forms with the *ortho* positioned hydroxyl (OH) moiety a five-membered ring or a six-membered ring, selected from a 2,3,3-trimethyltetrahydrofuran ring, a 2,2-dimethyldihydropyrane ring, and a 2,2-dimethyldihydropyrane ring.

In one embodiment, the prenyl moiety forms a 2,3,3-trimethyltetrahydrofuran ring, with the -ortho positioned hydroxyl moiety. Thus, in one embodiment, the xanthone may be of formula (I) wherein each independently of R1, R2, R3, R4, R5, R6, R7 and R8 is selected from H, OH, alkenyl, alkyl, alkyl-oxy, and/or *O*-β-D-glucopyranose; preferably selected from H, OH, alkenyl, and/or alkyl-oxy, typically selected from preferably selected from H, OH, and/or alkenyl; and wherein:
- R1 is OH, and R2 is prenyl, Rl and R2 forming a 2,3,3-trimethyltetrahydrofuran ring; and/or
- R2 is OH, and R1 is prenyl, Rl and R2 forming a 2,3,3-trimethyltetrahydrofuran ring; and/or
- R3 is OH, and R4 is prenyl, R3 and R4 forming a 2,3,3-trimethyltetrahydrofuran ring; and/or
- R4 is OH, and R3 is prenyl, R4 and R3 forming a 2,3,3-trimethyltetrahydrofuran ring; and/or
- R6 is OH, and R5 is prenyl, R6 and R5 forming a 2,3,3-trimethyltetrahydrofuran ring; and/or
- R5 is OH, and R6 is prenyl, R5 and R6 forming a 2,3,3-trimethyltetrahydrofuran ring; and/or
- R6 is OH, and R7 is prenyl, R6 and R7 forming a 2,3,3-trimethyltetrahydrofuran ring; and/or
- R7 is OH, and R6 is prenyl, R7 and R6 forming a 2,3,3-trimethyltetrahydrofuran ring; and/or
- R7 is OH, and R8 is prenyl, R7 and R8 forming a 2,3,3-trimethyltetrahydrofuran ring; and/or
- R8 is OH, and R7 is prenyl, R8 and R7 forming a 2,3,3-trimethyltetrahydrofuran ring.

In one specific embodiment, R3 is OH, and R4 is prenyl, R3 and R4 forming a 2,3,3-trimethyltetrahydrofuran ring.

According to one embodiment, the at least one xanthone is selected from a xanthone of formula (I) wherein:
- R2=R8: prenyl, R1=R3=R6=R7: OH, and R4=R5: H (γ-mangostin);
- R1=R3=R5: OH, R2=R6=R7=R8: H, and R4: prenyl (1,3,5 trihydroxy-4-prenylxanthone);
- R1=R3=R5: OH, R4=R6=R7=R8: H, and R2: prenyl (1,3,5 trihydroxy-2-prenylxanthone);
- R1=R5=R6: OH, R2=R3=R4=R8: H, and R7: prenyl;
- R8: geranyl, R1=R3=R6=R7: OH, and R4=R5: H (demethylrubraxanthone);
- R1=R3=R4=R5: OH, R6=R7=R8: H, and R2: prenyl, wherein the R2 and R3 moieties form a 2,3,3-trimethyltetrahydrofuran ring/

In one embodiment, the at least one xanthone is selected from a xanthone of formula (I) wherein:
- R1=R5=R6: OH, R2=R3=R4=R8: H, and R7: prenyl
- R8: geranyl, R1=R3=R6=R7: OH, and R4=R5: H;
- R1=R3=R4=R5: OH, R6=R7=R8: H, and R2: prenyl, wherein the R2 and R3 moieties form a 2,3,3-trimethyltetrahydrofuran ring.

In one embodiment, the at least one xanthone is selected from the group consisting of γ-mangostin, 1,3,5 trihydroxy-4-prenylxanthone, 1,3,5 trihydroxy-2-prenylxanthone, demethylrubraxanthone, and a mixture thereof.

In one embodiment, the at least one xanthone is selected from the group consisting of γ-mangostin, 1,3,5 trihydroxy-4-prenylxanthone, 1,3,5 trihydroxy-2-prenylxanthone and a mixture thereof.

In one embodiment, the sub-effective amount of the at least one xanthone is less than 0,1% in weight relative to the total weight of the composition of the invention. In one embodiment, the sub-effective amount of the at least one xanthone is less than or equal to 0,09% in weight relative to the total weight of the composition of the invention. In one embodiment, the sub-effective amount of the at least one xanthone is less than about 1000 ppm. In one embodiment, the sub-effective amount of the at least one xanthone is less than or equal to about 900 ppm, less than or equal to about 800 ppm, less than or equal to about 700 ppm, less than or equal to about 600 ppm, less than or equal to about 500 ppm. In one embodiment, the sub-effective amount of the at least one xanthone is less than or equal to about 2.52 mM. In one embodiment, the sub-effective amount of the at least one xanthone is less than or equal to about 2.50 mM. In one embodiment, the sub-effective amount of the at least one xanthone is less than or equal to about 2.43 mM. In one embodiment, the sub-effective amount of the at least one xanthone is less than or equal to about 2.30 mM, less than or equal to about 2.00 mM, less than or equal to about 1.50 mM, less than or equal to about 1.20 mM, less than or equal to about 1.00 mM. In one embodiment, the sub-effective amount of the at least one xanthone ranges from about 0.1 µM to about 2000 µM. In one embodiment, the sub-effective amount of the at least one xanthone ranges from about 1 µM to about 1500 µM. In one embodiment. the sub-effective amount of the at least one xanthone ranges from about 1 µM to about 1000 µM. In one embodiment, the sub-effective amount of the at least one xanthone ranges from about 1 µM to about 500 µM. In one embodiment, the sub-effective amount of the at least one xanthone ranges from about 1 µM to about 200 µM. In one embodiment, the sub-effective amount of the at least one xanthone ranges from about 1 µM to about 100 µM. In one embodiment, the sub-effective amount of the at least one xanthone ranges from about 1 µM to about 50 µM. In one embodiment, the sub-effective amount of the at least one xanthone ranges from about 2 µM to about 50 µM. In one embodiment, the sub-effective amount of the at least one xanthone ranges from about 2 µM to about 45 µM. In one embodiment, the sub-effective amount of the at least one xanthone ranges from about 2 µM to about 35 µM. In one embodiment, the sub-effective amount of the at least one xanthone ranges from about 2 µM to about 30 µM. In one embodiment, the sub-effective amount of the at least one xanthone ranges from about 2 µM to about 25 µM.

According to one embodiment, the sub-effective amount of the at least one xanthone ranges from 0.1 to 12.0 g of the at least one xanthone per hectare (Ha corresponding to 10,000 m**²**) of plant culture. It should be understood that, in the following embodiments, the plant culture refers to the field surface occupied by the plant culture. It should be also understood that the plant culture encompasses the plant organs to be treated according to the invention. In one embodiment, the sub-effective amount of the at least one xanthone ranges from 0.1 to 11.5 g /Ha of plant culture or from 0.1 to 11.0 g /Ha of plant culture. In one embodiment, the sub-effective amount of the at least one xanthone ranges from 0.1 to 10.5 g /Ha of plant culture or from 0.1 to 10.0 g /Ha of plant culture. In one embodiment, the sub-effective amount of the at least one xanthone ranges from 0.1 to 9.5 g /Ha of plant culture or from 0.1 to 9.0 g /Ha of plant culture. In one embodiment, the sub-effective amount of the at least one xanthone ranges from 0.1 to 8.5 g /Ha of plant culture or from 0.1 to 8.0 g /Ha of plant culture. In one embodiment, the sub-effective amount of the at least one xanthone ranges from 0.1 to 7.5 g /Ha of plant culture or from 0.1 to 7.0 g /Ha of plant culture. In one embodiment, the sub-effective amount of the at least one xanthone ranges from 0.1 to 6.5 g /Ha of plant culture or from 0.1 to 6.0 g /Ha of plant culture. In one embodiment, the sub-effective amount of the at least one xanthone ranges from 0.1 to 5.5 g /Ha of plant culture or from 0.1 to 5.0 g /Ha of plant culture. In one embodiment, the sub-effective amount of the at least one xanthone ranges from 0.1 to 4.5 g /Ha of plant culture or from 0.1 to 4.0 g /Ha of plant culture. In one embodiment, the sub-effective amount of the at least one xanthone ranges from 0.1 to 3.5 g /Ha of plant culture or from 0.1 to 3.0 g /Ha of plant culture. In one embodiment, the sub-effective amount of the at least one xanthone ranges from 0.1 to 3.3 g /Ha of plant culture or from 0.1 to 3.2 g /Ha of plant culture. In one embodiment, the sub-effective amount of the at least one xanthone ranges from 0.1 to 2.5 g /Ha of plant culture or from 0.1 to 2.0 g /Ha of plant culture. In one embodiment, the sub-effective amount of the at least one xanthone ranges from 0.1 to 1.5 g /Ha of plant culture or from 0.1 to 1.0 g /Ha of plant culture. In one embodiment, the sub-effective amount of the at least one xanthone ranges from 0.1 to 0.5 g /Ha of plant culture.

In one embodiment, the at least one xanthone is γ-mangostin. γ-mangostin is also referred to as normangostin and designates 1,3,6,7-tetrahydroxy-2,8-bis(3-methylbut-2-enyl)xanthen-9-one (CAS N° 31271-07-5) having a molecular weight of 396.4 g/mol and the structure of formula Ia. With respect to formula (I) γ-mangostin presents R2=R8: prenyl, R1=R3=R6=R7: OH, and R4=R5: H.

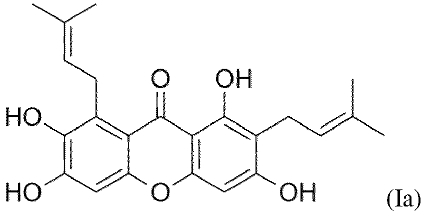

In one embodiment, the sub-effective amount of γ-mangostin is less than 0.1% in weight relative to the weight of the total composition of the invention. In one embodiment, the sub-effective amount of γ-mangostin is less than or equal to 0.09% in weight relative to the weight of the weight of the weight of the weight of the total composition of the invention. In one embodiment, the sub-effective amount of γ-mangostin is less than about 1000 ppm. In one embodiment, the sub-effective amount of γ -mangostin is less than or equal to about 900 ppm, less than or equal to about 800 ppm, less than or equal to about 700 ppm, less than or equal to about 600 ppm, less than or equal to about 500 ppm. In one embodiment, the sub-effective amount of γ-mangostin is less than about 2.52 mM. In one embodiment, the sub-effective amount of γ-mangostin is less than or equal to about 2.50 mM, is less than or equal to about 2.30 mM, less than or equal to about 2.00 mM, less than or equal to about 1.50 mM, less than or equal to about 1.20 mM, less than or equal to about 1.00 mM. In one embodiment, the sub-effective amount of γ-mangostin ranges from about 0.1 µM to about 2000 µM. In one embodiment, the sub-effective amount of γ-mangostin ranges from about 1 µM to about 1500 µM. In one embodiment, the sub-effective amount of γ-mangostin ranges from about 1 µM to about 1000 µM. In one embodiment, the sub-effective amount of γ-mangostin ranges from about 1 µM to about 500 µM. In one embodiment, the sub-effective amount of γ-mangostin ranges from about 1 µM to about 200 µM. In one embodiment, the sub-effective amount of γ-mangostin ranges from about 1 µM to about 100 µM. In one embodiment, the sub-effective amount of γ-mangostin ranges from about 1 µM to about 50 µM. In one embodiment, the sub-effective amount of γ-mangostin ranges from about 2 µM to about 50 µM. In one embodiment, the sub-effective amount of γ-mangostin ranges from about 2 µM to about 45 µM. In one embodiment, the sub-effective amount of γ-mangostin ranges from about 2 µM to about 35 µM. In one embodiment, the sub-effective amount of γ-mangostin ranges from about 2 µM to about 30 µM. In one embodiment, the sub-effective amount of γ-mangostin ranges from about 2 µM to about 25 µM.

In one embodiment, the at least one xanthone is 1,3,5 trihydroxy-4-prenylxanthone. 1,3,5 trihydroxy-4-prenylxanthone designates 1,3,5-trihydroxy-4-(3-methylbut-2-enyl)xanthen-9-one (CAS N° 53377-61-0) having a molecular weight of 312.3 g/mol and the structure of formula Ic. With respect to formula (I) 1,3,5 trihydroxy-4-prenylxanthone presents R1=R3=R5: OH, R2=R6=R7=R8: H, and R4: prenyl.

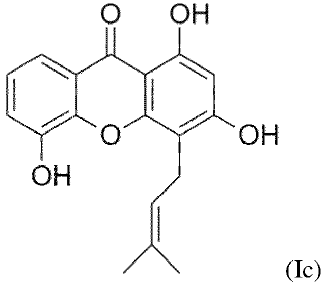

In one embodiment, the at least one xanthone is 1,3,5 trihydroxy-2-prenylxanthone. 1,3,5 trihydroxy-2-prenylxanthone also known as isombarraxanthone designates 1,3,5-trihydroxy-2-(3-methylbut-2-enyl)xanthen-9-one (CAS N° 20245-39-2) having a molecular weight of 312.3 g/mol and the structure of formula (Id). With respect to formula (I) 1,3,5 trihydroxy-2-prenylxanthone presents R1=R3=R5: OH, R4=R6=R7=R8: H, and R2: prenyl.

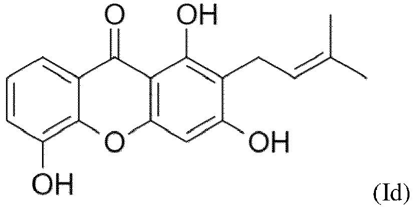

In one embodiment, the sub-effective amount of the compound of formula (Ic) or the compound of formula (Id) is less than 0.1% in weight relative to the weight of the weight of the total composition of the invention. In one embodiment, the sub-effective amount of the compound of formula (Ic) or the compound of formula (Id) is less than or equal to 0.09% in weight relative to the weight of the total composition of the invention. In one embodiment, the sub-effective amount of the compound of formula (Ic) or the compound of formula (Id) is less than about 1000 ppm. In one embodiment, the sub-effective amount of the compound of formula (Ic) or the compound of formula (Id) is less than or equal to about 900 ppm, less than or equal to about 800 ppm, less than or equal to about 700 ppm, less than or equal to about 600 ppm, less than or equal to about 500 ppm. In one embodiment, the sub-effective amount of the compound of formula (Ic) or the compound of formula (Id) is less than about 3.20 mM, is less than about 3.10 mM, less than 3.00 mM, less than 2.70 mM or less than 2.50 mM. In one embodiment, the sub-effective amount of the compound of formula (Ic) or the compound of formula (Id) is less than or equal to about 2.40 mM, is less than or equal to about 2.30 mM, less than or equal to about 2.00 mM, less than or equal to about 1.50 mM, less than or equal to about 1.20 mM, less than or equal to about 1.00 mM. In one embodiment, the sub-effective amount of the compound of formula (Ic) or the compound of formula (Id) ranges from about 0.1 µM to about 2000 µM. In one embodiment, the sub-effective amount of the compound of formula (Ic) or the compound of formula (Id) ranges from about 1 µM to about 1500 µM. In one embodiment, the sub-effective amount of the compound of formula (Ic) or the compound of formula (Id) ranges from about 1 µM to about 1000 µM. In one embodiment, the sub-effective amount of the compound of formula (Ic) or the compound of formula (Id) ranges from about 1 µM to about 500 µM. In one embodiment, the sub-effective amount of the compound of formula (Ic) or the compound of formula (Id) ranges from about 1 µM to about 200 µM. In one embodiment, the sub-effective amount of the compound of formula (Ic) or the compound of formula (Id) ranges from about 1 µM to about 100 µM. In one embodiment, the sub-effective amount of the compound of formula (Ic) or the compound of formula (Id) ranges from about 1 µM to about 50 µM. In one embodiment, the sub-effective amount of the compound of formula (Ic) or the compound of formula (Id) ranges from about 2 µM to about 50 µM. In one embodiment, the sub-effective amount of the compound of formula (Ic) or the compound of formula (Id) ranges from about 2 µM to about 45 µM. In one embodiment, the sub-effective amount of the compound of formula (Ic) or the compound of formula (Id) ranges from about 2 µM to about 35 µM. In one embodiment, the sub-effective amount of the compound of formula (Ic) or the compound of formula (Id) ranges from about 2 µM to about 30 µM. In one embodiment, the sub-effective amount of the compound of formula (Ic) or the compound of formula (Id) ranges from about 2 µM to about 25 µM.

According to one embodiment, the at least one UPR inhibitor is an extract of a Clusiaceae plant extract, comprising γ-mangostin. Typically, the Clusiaceae plant extract is a *Garcinia mangostana* plant extract, preferably selected from *Garcinia mangostana* leaf, bark or pericarp extract. Typically, the extract is a *Garcinia mangostana* pericarp extract.

In one embodiment, such extract is an aqueous extract, an hydroalcoholic extract, an ethanolic extract, a methanolic extract, an ethyl acetate extract or a supercritical CO₂ extract. In one embodiment, the extract is obtained with a mixture of ethyl acetate and ethanol, typically in a ethyl acetate:ethanol volume ratio ranging from 60:40 to 90:10, from 70:30 to 80:20, from 75:25 to 80:20. In one specific, embodiment, the extract is obtained with a mixture of ethyl acetate and ethanol, in a ethyl acetate:ethanol volume ratio of about 75:25, of about 76:24, of about 77:23, of about 78:22, of about 79:21, or of about 80:20.

In one embodiment, the above extracts can be obtained by ultrasound or microwave assisted extraction methods.

In one embodiment, the extract is a crude extract of the plant or a fractionated part thereof. Any means, such as chromatographic means that are known in the art may be used to fractionate a crude extract such as for example, liquid-liquid extraction/partitioning and/or adsorption/absorption chromatography.

Typically, the *Garcinia mangostana* pericarp crude extract comprises from 10 to 15% w/w of γ-mangostin in dry weight relative to the dry weight of the crude extract. For instance, 100 mg of G. *mangostana* crude dry extract comprise about 25 µmol of γ-mangostin.

It is understood that fractionated parts of the crude extract may comprise γ-mangostin in different concentrations. The *Garcinia mangostana* pericarp crude extract may further comprise xanthones according to the present invention such as 1,3,5 trihydroxy-4-prenylxanthone, 1,3,5 trihydroxy-2-prenylxanthone. The *Garcinia mangostana* pericarp crude extract may further comprise xanthones that do not fall in the scope of the present invention such as α-mangostin. Advantageously, the *Garcinia mangostana* pericarp crude can be used at a concentration wherein all its constituents are in an *in vitro* non-fungicidal amount such as for example less than 200 mg/L, less than 150 mg/L or less than 100 mg/mL. It is of note that the skilled artisan can adapt these non-fungicidal amounts if a γ-mangostin-rich or γ-mangostin-poor fraction is used instead of a *Garcinia mangostana* pericarp crude extract.

In one embodiment, the at least one UPR inhibitor, typically the at least one IRE 1 inhibitor, is at least one naphthoquinone.

Naphthoquinones is a class of organic compounds structurally related to naphthalene. Two isomers are common for the parent naphthoquinone: 1,2 naphthoquinone and 1,4 naphthoquinone. In a preferred embodiment, the UPR inhibitor is a 1,4 naphthoquinone.

According to one embodiment, the at least one naphthoquinone is selected from the group consisting of alkannin, hexahydroxy-1,4-naphthalenedione, juglone, lapachol, lawsone, menatetrenone, 2-methoxy-1,4-naphthoquinone, nigrosporin B, 2,3,5,6,8-pentahydroxy-1,4-naphthalenedione, phylloquinone, plumbagin and 2,3,5,7-tetrahydroxy-1,4-naphthalenedione or a combination thereof.

According to a typical embodiment, the at least one UPR inhibitor is at least one naphthoquinone of formula (II): 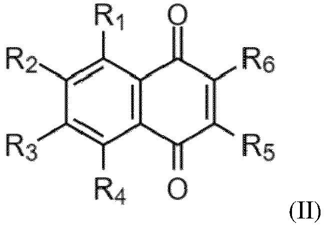 wherein each independently of R1, R2, R3, R4, R5 and R6, is selected from H, OH, alkenyl, alkyl, alkyl-oxy, and/or *O*-β-D-glucopyranose.

In some embodiments, each independently of R1-R6 is selected from H, OH, alkyl selected from methyl and/or ethyl, alkyl-oxy selected from methyl-oxy and/or ethyloxy, *O*-β-D-glucopyranose or prenyl (2-methylpent-2-en-yl).

In some embodiments, R5=R6: H and R1-R4 is each independently selected from H, OH, methyl, methyl-oxy, or *O*-β-D-glucopyranose. In some embodiments, R6: H and R1-R5 is each independently selected from H, OH, methyl-oxy, and/or *O*-β-D-glucopyranose. In some embodiments, R5=R6: H and R1-R4 is each independently selected from H, OH, methyl-oxy, and/or *O*-β-D-glucopyranose. In some embodiments, R5=R6: H and R1-R4 is each independently selected from H, OH, methyl, and/or methyl-oxy.

In one embodiment, the at least one naphthoquinone is selected from juglone, lawsone and/or plumbagin. In one typical embodiment, the at least one naphthoquinone is juglone.

Juglone designates 5-hydroxy-1,4-naphthalenedione. Juglone corresponds to a compound of formula (IIa) and to a compound of formula (II) wherein R1=R2=R3=R5=R6 are H and R4 is OH.

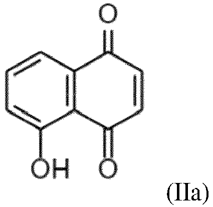

Juglone has the CAS N° 481-39-0. Juglone is also known as 5-hydroxy-1,4-naphthoquinone, 5-hydroxy-p-naphthoquinone, regianin, 5-hydroxynaphthoquinone, nucin, NCI 2323, Oil Red BS, or C.I. Natural Brown 7. Juglone occurs naturally in the leaves, roots, husks, fruit (the epicarp), and bark of plants in the Juglandaceae family, particularly the black walnut *(Juglans nigra).*

In one embodiment, the at least one naphthoquinone, typically juglone, is in the form of a Juglandaceae family plant extract. In one embodiment, the plant is *Juglans nigra* or *Juglans regia.* Typically, the Juglandaceae family plant extract is a leaf, husk and/or pericarp extract of *Juglans nigra* and/or *Juglans regia.* In one embodiment, such extract is an aqueous extract, an hydroalcoholic extract, an ethanolic extract, a methanolic extract, an ethyl acetate extract or a supercritical CO₂ extract.

In one embodiment, the sub-effective amount of the at least one naphthoquinone, typically of juglone or the Juglandaceae family plant extract, is less than or equal to 10% in weight relative to the weight of the total composition of the invention. In one embodiment, the sub-effective amount of juglone or the Juglandaceae plant extract is less than or equal to 9 %, less than or equal to 8 %, less than or equal to 7 %, less than or equal to 6 %; less than or equal to 5 %; less than or equal to 3 %, less than or equal to 2 %, less than or equal to 1 % or less than or equal to 0,5 %, in weight relative to the weight of the total composition of the invention. In one embodiment, the sub-effective amount of juglone or is less than or equal to 0,1 µM. In one embodiment, the sub-effective amount of juglone or is less than or equal to 0,05 µM.

In one embodiment, the at least one UPR inhibitor, typically the at least one IRE 1 inhibitor, is at least one phenolic acid ester.

In one embodiment, the at least one phenolic acid ester is phenolic acid ester of formula (III) 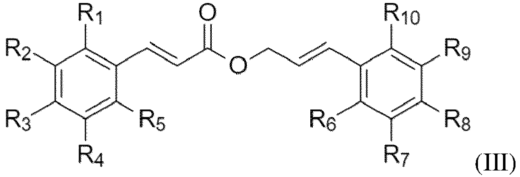 wherein each independently of R1-R10 is selected from H, OH, alkyl-oxy, typically methyl-oxy, and/or *O*-β-D-glucopyranose.

In one embodiment, the phenolic acid ester is selected from esters of caffeic acid (3-(3,4-dihydroxyphenyl)-2-propenoic acid), esters of 4-hydroxycinnamic acid (3-(4-hydroxyphenyl)-2-propenoic acid) and/or esters of ferulic acid ((3-(4-hydroxy-3-methoxyphenyl)prop-2-enoic acid) esters. Preferably the at least one phenolic acid ester is a caffeic acid ester.

Caffeic acid is an organic compound that is classified as a hydroxycinnamic acid. It is found in all plants because it is an intermediate in the biosynthesis of lignin, one of the principal components of woody plant biomass and its residues. It has no connection with caffeine, but occurs naturally in small amounts in coffee in the free state and in very large amounts in the esterified state.

In one embodiment, the at least one phenolic acid ester is caffeic acid ester of formula (IIIa) 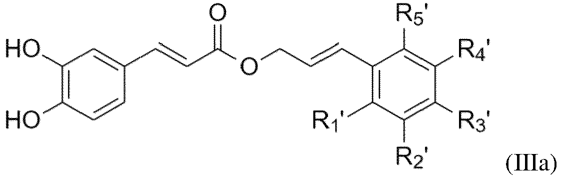 wherein each independently of R1'-R5' is selected from H, OH, alkyl-oxy, typically methyl-oxy, and/or *O*-β-D-glucopyranose.

In one embodiment, the caffeic acid ester is cinnamyl caffeate.

Cinnamyl caffeate refers to [(E)-3-phenylprop-2-enyl] (E)-3-(3,4-dihydroxyphenyl)prop-2-enoate (CAS N° 115610-32-7) having a molecular weight of 296.3 g/mol and the structure of formula IIIb. Cinnamyl caffeate may also be referred to as Cinnamyl (E)-3-(3,4-dihydroxyphenyl)acrylate, 3,4-Dihydroxycinnamic acid 3-phenyl-2-propenyl ester or 3-(3,4-Dihydroxyphenyl)propenoic acid 3-phenyl-2-propenyl ester. With respect to formula (IIIa)cinnamyl caffeate presents R1'=R2'=R3'=R4'=R5': H.

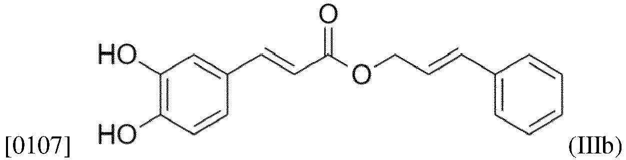

In one embodiment, the at least one UPR inhibitor, typically the at least one IRE 1 inhibitor, is at least one oxoaporphine alkaloid.

Several naturally occurring oxoaporphines with the debenzoquinoline skeleton are presently known. They have been reported in plant species of the families Anonaceae, Araceae, Hernandiaceae, Lauraceae, Magnoliaceae, Menispermaceae, Monimiaceae, Papaveraceae, and Ranunculaceae.

In one embodiment, the at least one oxoaporphine alkaloid is a compound of formula (IV) 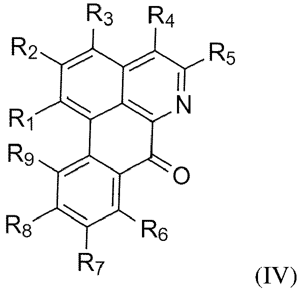 wherein:
- R1 and R2 are such that
   o R1 is selected from H, OH, or an alkyl-oxy, typically a methyl-oxy; and R2 is selected from H, OH, or an alkyl-oxy, typically a methyl-oxy; or
   o R1 and R2 together form a ring comprising 5 or 6 atoms, preferably a heterocycle comprising 5 or 6 atoms, more preferably a dioxolane;
- R3, R4, R5 and R6 are each independently selected from H, OH, or an alkyl-oxy, typically a methyl-oxy; and
- R7, R8 and R9 are such that
   o R7 is selected from H, OH, or an alkyl-oxy, typically a methyl-oxy;
   o R8 is selected from H, OH, or an alkyl-oxy, typically a methyl-oxy; and
   o R9 is selected from H, OH, or an alkyl-oxy, typically a methyl-oxy; or
   o R7 and R8 together form a ring comprising 5 or 6 atoms, preferably a heterocycle comprising 5 or 6 atoms, more preferably a dioxolane; and R9 is selected from H, OH, or an alkyl-oxy, typically a methyl-oxy; or
   o R8 and R9 together form a ring comprising 5 or 6 atoms, preferably a heterocycle comprising 5 or 6 atoms, more preferably a dioxolane; and R7 is selected from H, OH, or an alkyl-oxy, typically a methyl-oxy.

In one embodiment, the at least one oxoaporphine alkaloid is oxostephanine. Oxostephanine refers to the compound: 15-methoxy-3,5-dioxa-11-azapentacyclo [10.7.1.0^{2,6}.0^{8,20}.0^{14,19}]icosa-(20),2(6),7,9,11, 14(19),15,17-octaen-13-one of formula (IVa)

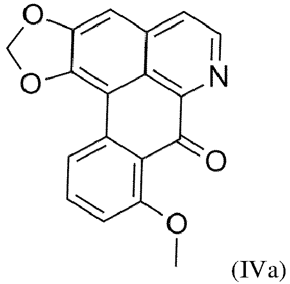

Oxostephanine has a molecular weight of 305,3 g/mol (CAS N° 58262-58-1). Oxostephanine presents formula (IV) wherein:
- R1 and R2 form a dioxolane ring,
- R3, R4, and R5 are H,
- R6 is methyl-oxy,
- R7, R8 and R9 are H.

According to an alternative embodiment, the at least one UPR inhibitor is an extract of a Menispermaceae and/or Annonaceae plant extract, comprising at least one compound of formula (IV). In one embodiment, the Menispermaceae and/or Annonaceae plant extract comprises oxostephanine. Typically, the Menispermaceae plant extract is a *Stephania* spp plant extract, such as for example S. *venosa, S.dielsiana, S.rotunda.* In one embodiment, the extract is a leaf, bark or pericarp extract. In one embodiment, such extract is an aqueous extract, an hydroalcoholic extract, an ethanolic extract, a methanolic extract, an ethyl acetate extract or a supercritical CO₂ extract. In one embodiment, the extract is a crude extract of the plant or a fractionated part thereof as described above.

In one embodiment, the composition comprises at least two, at least, at least three or at least four or more UPR inhibitors selected from:
- at least one xanthone of formula (I) as defined above or a plant extract comprising thereof as defined above, preferably the at least one xanthone of formula (I) being selected from γ-mangostin, 1,3,5 trihydroxy-4-prenylxanthone, and/or 1,3,5 trihydroxy-2-prenylxanthone, even more preferably the at least one xanthone of formula (I) is γ-mangostin, typically in the in vitro sub-effective amount defined above,
- at least one naphthoquinone of formula (II) as defined above, or a plant extract comprising thereof as define above, preferably the at least one naphthoquinone of formula (II) being juglone, typically in the in vitro sub-effective amount defined above,
- at least one phenolic acid ester of formula (III) as defined above or a plant extract comprising thereof as define above, preferably the at least one phenolic acid ester being phenolic acid ester of formula (IIIa)as defined above, even more preferably the at least one phenolic acid ester being cinnamyl caffeate, typically in the in vitro sub-effective amount defined above, and
- at least one oxoaprphine alkaloid of formula (IV) as defined above or a plant extract comprising thereof as define above, preferably the at least one oxoaporphine alkaloid of formula (IV) being oxostephanine, typically in the in vitro sub-effective amount defined above,

In one embodiment, the composition comprising the at least one UPR inhibitor, as described above, further comprises at least one phytopharmaceutical vehicle. The composition may therefore be a phytopharmaceutical composition.

In one embodiment, the composition of the invention is in a solid form, such as, for example, granules, wettable powders, water dispersible granules or powders and the like.

In another embodiment, the composition of the invention is in a liquid form, such as, for example, a suspension, a solution or an emulsion, such as, for example, an oil-inwater emulsion or a water-in-oil emulsion.

In one embodiment, the composition may be formulated as a concentrate to be diluted, such as, for example, a soluble concentrate, an emulsifiable concentrate, and the like.

In one embodiment, the composition may comprise additional agents, such as, for example, natural or regenerated mineral substances, solvents, dispersants, solid carriers, surfactants, wetting agents, tackifiers, thickeners, and/or binders.

Examples of solvents include, but are not limited to, aromatic hydrocarbons, such as, for example, xylene mixtures or substituted naphthalenes; phthalates, such as, for example, dibutyl phthalate or dioctyl phthalate; aliphatic hydrocarbons, such as, for example, cyclohexane or paraffins; alcohols and glycols and their ethers and esters, such as, for example, ethanol, ethylene glycol, ethylene glycol monomethyl or monoethyl ether; ketones, such as, for example, cyclohexanone; strongly polar solvents, such as, for example, N-methyl-2-pyrrolidone, dimethyl sulfoxide or dimethylformamide; vegetable oils or epoxidised vegetable oils, such as, for example, epoxidised coconut oil or soybean oil; and water.

Examples of solid carriers include, but are not limited to, natural mineral fillers, such as, for example, calcite, talcum, kaolin, montmorillonite or attapulgite; highly dispersed silicic acid or highly dispersed absorbent polymers; pumice, broken brick, sepiolite or bentonite; calcite or sand; dolomite or pulverized plant residues.

Examples of surfactants include, but are not limited to, anionic surfactants including; alkylsulfosuccinic acid salts, condensated phosphate acid salts, alkylbenzenesulfonic acid salts such as, for example, dodecylbenzenesulfonic acid sodium salt, alkylnaphthalenesulfonic acid salts, formalin condensates of naphthalenesulfonic acid salts, ligninsulfonic acid salts, polycarboxylic acid salts, alkylethersulfuric acid salts, polyoxyethylene-alkylarylphenylether-sulfuric acid salts, polyoxyethylene-alkylarylether-sulfuric acid salts, polyoxyethylene-alkylaryl-sulfuric acid salts, polyoxyethylene-alkylaryether-sulfate ester salts, polyoxyethylene-alkylarylether-acetate ester-sulfuric acid salts; nonionic surfactants such as, for example, polyoxyethylene-alkylether, polyoxyethylene-alkylarylether, polyoxyethylene-alkylarylphenylether, polyoxyethylene-styrylphenylether, polyoxyethylene-alkyl ester, sorbitan-alkyl-ester, polyoxyethylene-sorbitanalkyl-ester, and polyoxyethylenepolyoxypropyleneglycol. As used herein, the salt form includes alkali-metal salts, ammonium salts, and amine salts.

In one embodiment, the method further comprises applying at least one inhibitor of Serine/Threonine kinase PKc (Protein Kinase C) that is hereinafter designated as at least on PKc inhibitor. In one embodiment, the at least one PKc inhibitor is applied simultaneously or sequentially to the composition comprising at least one UPR inhibitor. In one embodiment, when the PKc inhibitor is applied simultaneously with the composition comprising at least one UPR inhibitor, the composition of the invention comprises the at least one UPR inhibitor and further comprises said at least one PKc inhibitor.

Methods for identifying PKc inhibitors are well known of the skilled artisan. An example of such method includes, but is not limited to, measuring the kinase activity of (partially) purified PKc in presence of increasing amounts of potential inhibitors. Useful kits for measurement of PKc activity may be selected among PepTag Assay (Promega), MESACUP PKA/PKC assay kit ; Cyclex PKc superfamily kinase assay kit (MBL); Protein kinase C assay kits (PANVERA); Z'-Lyte FRET based kinase assay (Invitrogen); Omnia assay kit (Invitrogen).

Examples of inhibitors of PKc include, but are not limited to, chelerythrin, chelerythrin chloride, chelerythrine sulphate, sanguinarine sulphate, 3-(1H-indol-3-yl)-4-[2-(4-methylpiperazin-1-yl)quinazolin-4-yl]pyrrole-2,5 -dione (AEB071), 13-HODE, AEB-071, Annexin V, Aprinocarsen, ARC, Bisindolylmaleimide GF 109203X, bisphosphonate, Bryostatin-1, BSP-A1/-A2, Butein, Calphostin C, Curcumin, Daphnetin, Dexamethasone, Enzastaurin, Erbstatin, GO6976, H-7 Hispidin, Hypocrellin A, hypericin, LY333531, Midostaurin, MT477, N-myristyl-Lys-Arg-Thr-Leu-Arg, NPC 15437, PAP, PKC412, R8605, RK-286C, Ro 31-8220, Rottlerin, ruboxistaurin, Sotrastaurin, Staurosporine, UCN-01, UCN-02, Vanicosides A and B, and Verbascoside.

Examples of PKc inhibitors also include, but are not limited to, compounds of general formula (V), (VI) or (VII) as hereinafter described. In one specific embodiment, the at least one PKc inhibitor is selected from the group consisting of chelerythrine, sanguinarine, berberine and/or coptisine. In one specific embodiment, the at least one PKc inhibitor is selected from the group consisting of chelerythrine and sanguinarine. In one specific embodiment, the at least one PKc inhibitor is selected from the group consisting of berberine and coptisine.

In one embodiment of the invention, the at least one PKc inhibitor is an isoquinoline of general formula (V): 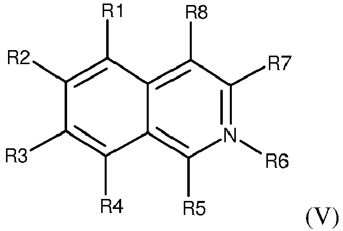 wherein :
each of R1 to R5 independently is H, OH, a halogen atom, an alkyl, an alkyl-oxy or an alkenyl group;
R6 is absent or is present and when present, R6 may be H, OH, an alkyl, an alkyl-oxy or an alkenyl group; when R6 is present, a counterion may be preferably selected from the group comprising Cl⁻, CH₃SO₃⁻, HSO₄⁻, I⁻, HCO₃⁻, BF₄⁻ or PF₆⁻; and
R7 and R8 are independently H, OH, a halogen atom, an alkyl, an alkyl-oxy or an alkenyl group or R7 and R8 form together a ring, preferably a substituted ring, more preferably a substituted or unsubstituted naphthalene, a substituted or unsubstituted isoquinoline.

In one embodiment of the invention, R3 and R4 and/or R6 and R7 and/or R7 and R8, together form a ring, preferably comprising 5 or 6 atoms. In one embodiment, said ring may be substituted.

In one embodiment, the compound of general formula (V) is such that R7 and R8 together form a ring, preferably a substituted ring, more preferably a substituted naphthalene. According to this embodiment, the at least one PKc inhibitor of a plant defense molecule is a benzo[c]phenantridine of general formula (VI): 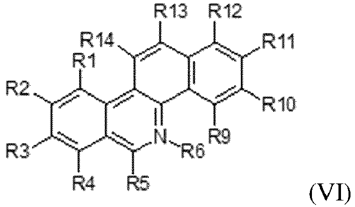 wherein:
- R1 is H, OH, a halogen atom, an alkyl, an alkyl-oxy or an alkenyl group, preferably R1 is H;
- R2 is H, OH, a halogen atom, an alkyl, an alkyl-oxy or an alkenyl group, preferably R2 is H or methyl-oxy;
- R3 and R4 are such that
   o R3 is H, OH, a halogen atom, an alkyl, an alkyl-oxy or an alkenyl group; preferably R3 is methyl-oxy; and R4 is H, OH, a halogen atom, an alkyl, an alkyl-oxy or an alkenyl group, preferably R4 is H or methyl-oxy; or
   o R3 and R4 together form a ring comprising 5 or 6 atoms, preferably a heterocycle comprising 5 or 6 atoms, more preferably a dioxolane;
- R5 is H, OH, a halogen atom, an alkyl, an alkyl-oxy or an alkenyl group, preferably R5 is H;
- R6 is absent or is present and when present, R6 may be H, OH, an alkyl, an alkyl-oxy or an alkenyl group, preferably R6 is absent or CH3; when R6 is present, a counterion may be preferably selected from the group comprising Cl⁻, CH₃SO₃⁻, HSO₄⁻, I⁻, HCO₃⁻, BF₄⁻ or PF₆⁻;
- R9 is H, OH, a halogen atom, an alkyl, an alkyl-oxy or an alkenyl group, preferably R9 is H;
- R10 and R11 are such that
   o R10 is H, OH, an alkyl, an alkyl-oxy, a halogen atom or an alkenyl group, preferably R10 is methyl-oxy; and R11 is H, OH, an alkyl, an alkyl-oxy, a halogen atom or an alkenyl group, preferably R11 is methyl-oxy; or
   o R10 and R11 together form a ring comprising 5 or 6 atoms, preferably a heterocycle comprising 5 or 6 atoms, more preferably a dioxolane;
- R12 is H, OH, a halogen atom, an alkyl, an alkyl-oxy or an alkenyl group, preferably R12 is H;
- R13 is H, OH, a halogen atom, an alkyl, an alkyl-oxy or an alkenyl group, preferably R13 is H or O-CH₂-C₆H₅; and
- R14 is H, OH, a halogen atom, an alkyl, an alkyl-oxy or an alkenyl group, preferably R14 is H.

Examples of compounds of general formula (VI) include, but are not limited to:

| **Compound** | **Structure** |
|---|---|
| 1 | 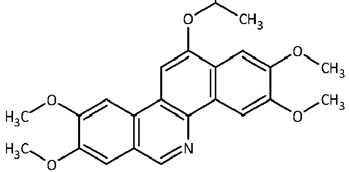 |
| 2 | 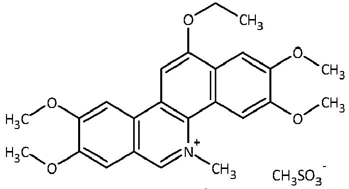 |
| 3 | 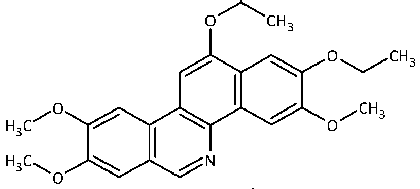 |
| 4 | 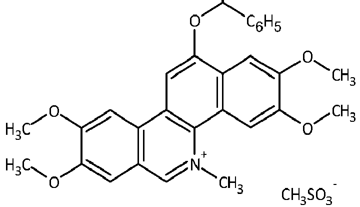 |
| Chelerythrine | 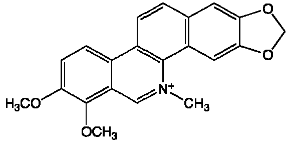 |
| Sanguinarine | 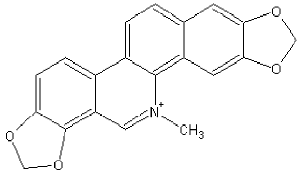 |

In one embodiment, the at least one PKc inhibitor is selected from the group consisting of compound 1, compound 2, compound 3, compound 4, chelerythrine, sanguinarine; and Cl⁻, HSO₄⁻, I⁻ or HCO₃⁻ salts thereof, and mixtures thereof.

In one embodiment, the at least one PKc inhibitor is selected from chelerythrine, sanguinarine; and Cl⁻, HSO₄⁻, I⁻, HCO₃⁻ salts thereof. In one embodiment, the at least one PKc inhibitor is a mixture of chelerythrine and sanguinarine. In one embodiment, the at least one PKc inhibitor is a mixture of Cl⁻, HSO₄⁻, I⁻, HCO₃⁻ salts of sanguinarine and chelerythrine.

In one embodiment, the at least one PKc inhibitor is assessed for its anti-fungal effects as well as comprised in the compositions of the invention in a purified form comprising substantially exclusively such potentiating agent (at least 85 % w/w or at least 90 % w/w, in weight relative to the at least one PKc inhibitor composition).

In one embodiment, the at least one PKc inhibitor is comprised in the compositions of the invention in the form of a plant extract comprising at least 20 % w/w of chelerythrine, sanguinarine; and Cl⁻, HSO₄⁻, I⁻, HCO₃⁻ salts thereof, in weight relative to the dry weight of the extract. In one embodiment, the extract comprising the at least one PKc inhibitor is an extract of a plant selected from *Macleaya cordata, Chelidonium majus, Agremone Mexicana* or *Sanguinaria canadensis.*

In one embodiment, such extract is an aqueous extract, an hydroalcoholic extract, an ethanolic extract, a methanolic extract, an ethyl acetate extract or a supercritical CO₂ extract.

In one embodiment, the extract is a crude extract, without subsequent fractionation of the extracted compounds.

In one embodiment, the extract is an enriched extract, preferably an alkaloidenriched extract or fraction. Numerous techniques are known in the art for obtaining such enriched extract such as for example, liquid-liquid extraction/partitioning or adsorption/absorption chromatography.

In one particular embodiment, the at least one PKc inhibitor is a *Macleaya cordata* extract. Preferably such extract comprises at least 30 % w/w or at least 40 % w/w of sanguinarine, in weight relative to the dry extract weight.

In one embodiment, the molar ratio of sanguinarine/chelerythrine is such extract ranges from 2 to 4, from 2.5 to 3.5 or is about 2.8.

In one embodiment, the compound of general formula (V) is such that R6 and R7 together form a ring, preferably a substituted ring, more preferably a bi-cycle. According to this embodiment, the at least one PKc inhibitor of a plant defense molecule may be a compound of general formula (VII) 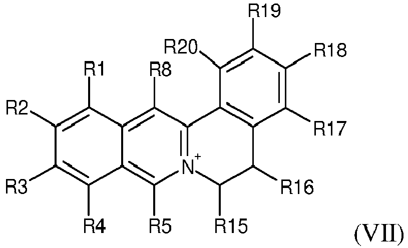 wherein:
- R1 is H, OH, an alkyl, an alkyl-oxy, a halogen atom or an alkenyl group, preferably R1 is H;
- R2, R3 and R4 are such that:
   o R2 and R3 together form a ring comprising 5 or 6 atoms, preferably a heterocycle comprising 5 or 6 atoms, more preferably a dioxolane and R4 is H, OH, an alkyl, an alkyl-oxy, a halogen atom or an alkenyl group, preferably R4 is H; or
   o R3 and R4 together form a ring comprising 5 or 6 atoms, preferably a heterocycle comprising 5 or 6 atoms, more preferably a dioxolane and R2 is H, OH, an alkyl, an alkyl-oxy, a halogen atom or an alkenyl group, preferably R2 is H; or
   ∘ each of R2, R3 and R4 independently is H, OH, an alkyl, an alkyl-oxy, a halogen atom or an alkenyl group;
- each of R5, R15 and R16 independently is H, OH, an alkyl, an alkyl-oxy, a halogen atom or an alkenyl group, preferably each of R5, R15 and R16 is H;
- R17 is H, OH, an alkyl, an alkyl-oxy, a halogen atom or an alkenyl group, preferably R17 is H or methyl-oxy;
- R18 and R19 are such that
   o R18 is H, OH, an alkyl, an alkyl-oxy, a halogen atom or an alkenyl group, preferably R18 is methyl-oxy; and R19 is H, OH, an alkyl, an alkyl-oxy, a halogen atom or an alkenyl group, preferably R19 is H; or
   o R18 and R19 together form a ring comprising 5 or 6 atoms, preferably a heterocycle comprising 5 or 6 atoms, more preferably a dioxolane; and
- R20 is H, OH, an alkyl, an alkyl-oxy, a halogen atom or an alkenyl group, preferably R20 is H.

In one embodiment, the counterion may be selected from the group comprising Cl⁻, CH₃SO₃⁻, HSO₄⁻, I⁻, HCO₃⁻, BF₄⁻ or PF₆⁻.

Examples of compounds of general formula (VII) include, but are not limited to,

| **Compound** | Structure |
|---|---|
| Coptisine | 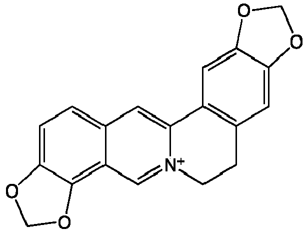 |
| Berberine | 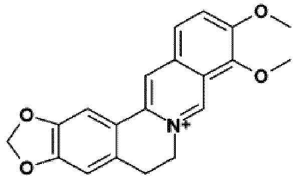 |

Advantageously, the at least one PKc inhibitor is in an in vitro sub-effective, typically non-fungicidal amount. The methods for determining the in vitro sub-effective amount of the at least one UPR inhibitor are also applicable for determining the in vitro sub-effective amount of the at least one PKc inhibitor. In one embodiment, the in vitro sub-effective amount of least one PKc inhibitor is in a concentration equal or inferior to a non-fungicidal concentration C2; wherein the non-fungicidal concentration C2 is determined by comparing the growth of the phytopathogenic fungal strain cultures in contact with increasing concentrations of said at least one PKc inhibitor, with the growth of a control culture of the phytopathogenic fungal strain, in the absence of said at least one PKc inhibitor; the last concentration of the increasing concentrations of the at least one PKc inhibitor resulting in the same fungal culture growth as the control culture being retained as the non-fungicidal concentration C2 of said at least one PKc inhibitor.

In one specific embodiment, the sub-effective, typically the non-fungicidal amount of the at least one PKc inhibitor ranges from about 1 nM to about 100 µM or from about 1 nM to about 50 µM.

In one embodiment, the sub-effective, typically the non-fungicidal amount of the at least one PKc inhibitor ranges from about 1 µM to about 150 µM, preferably from about 5 µM to about 70 µM, more preferably from about 5 to about 50 µM or from about 1 to about 10 µM.

In one embodiment, when the amount of the at least one PKc inhibitor is reported to chelerythrine the sub-effective, typically the non-fungicidal amount of said least one PKc inhibitor ranges from more than 0 µM to about 70 µM, from more than 0 µM to about 40 µM, or from more than 0 µM to about 30 µM.

In one embodiment, when the amount of the at least one PKc inhibitor is reported to sanguinarine the sub-effective, typically the non-fungicidal amount of said least one PKc inhibitor ranges from more than 0 µM to about 150 µM, from more than 0 µM to about 80 µM, from more than 0 µM to about 75 µM, or from more than 0 µM to about 50 µM.

In one embodiment, the method further comprises applying at least one agent for stimulating the production of a plant defense molecule such as, for example, a phytoalexin, by a plant organ. In one embodiment, the at least one at least one agent for stimulating the production of a plant defense molecule is applied simultaneously or sequentially to the composition comprising at least one UPR inhibitor. In one embodiment, when the agent for stimulating the production of a plant defense molecule is applied simultaneously with the composition comprising at least one UPR inhibitor, the composition of the invention comprises the at least one UPR inhibitor and further comprises said the at least one at least one agent for stimulating the production of a plant defense molecule.

In one embodiment, said agent for stimulating the production of a plant defense molecule is present in the composition in a sub-effective, typically a non-fungicidal amount. Preferably, said non-fungicidal amount is determined as previously detailed above. The methods for determining the in vitro sub-effective amount of the at least one UPR inhibitor are also applicable for determining the in vitro sub-effective amount of the at least one agent for stimulating the production of a plant defense molecule. In one embodiment, the in vitro sub-effective amount of least one agent for stimulating the production of a plant defense molecule is in a concentration equal or inferior to a non-fungicidal concentration C3; wherein the non-fungicidal concentration C3 is determined by comparing the growth of the phytopathogenic fungal strain cultures in contact with increasing concentrations of said at least one agent for stimulating the production of a plant defense molecule, with the growth of a control culture of the phytopathogenic fungal strain, in the absence of said at least one agent for stimulating the production of a plant defense molecule; the last concentration of the increasing concentrations of the at least one agent for stimulating the production of a plant defense molecule resulting in the same fungal culture growth as the control culture being retained as the non-fungicidal concentration C3 of said at least one agent for stimulating the production of a plant defense molecule.

In one embodiment, the agent for stimulating the production of a plant defense molecule is selected from acibenzolar-S-methyl (benzothiadiazole) (such as for example BION 50 WG^{®} or DACONIL ACTION^{®}), chitosan (such as for example BIOREND^{®} KITOZYM^{®}, CHARGE^{®}, ChiProPant^{®} or KITAE^{®}), laminarin (such as for example VACCIPLANT^{®} or IODUS^{®}), a plant extract such as *Reynoutria Sachalinensis* extract (such as for example REGALIA^{®}), calcium prohexadione (such as for example APOGEE^{®} or REGALIS^{®}), harpine (such as for example PROACT^{®}), yeast wall extracts such as cerevisane (such as for example ROMEO^{®} or ACTILEAF^{®}), COS-OGA (Chito-oligosaccharides in association with Oligo-galacturonides, such as for example FYTOSAVE^{®} or MESSAGER^{®} or MESSIDOR^{®} or GALOPIN+^{®} or BASTID^{®} or BLASON^{®} or ESDEAINE^{®}), oligogalacturonides, dissodium or calcium or potassium phosphonates (such as for example CERAXEL^{®} or SIRIUS^{®} or REDELI^{®} or ETONAN^{®} or FRUCTIAL^{®} or SDN TOP^{®} or SORIALE^{®} or PERTINAN^{®} or MIFOS or LBG-01F34^{®}), 24-Epibrassinolide, ABE-IT56 (Yeast Extract), , Heptamaloxyloglucan, Pepino mosaic virus strain CH2 isolate 1906 and *Pythium oligandrum* strain B301, Micropeptides (≤100 amino acids), amino acids, living microorganisms and microorganisms extract (such as lysate of amibes *Willaertia magna* C2c Maky).

In one particular embodiment, the composition further comprises at least one phytopharmaceutical antifungal agent. In one embodiment, the at least one phytopharmaceutical antifungal agent is synthetic or mineral fungistatic or fungicide phytopharmaceutical agent. The at least one phytopharmaceutical antifungal agent may be selected from the list consisting of 2-(dithiocyanomethylthio)-benzothiazol, 2,5-Dichlorobenzoic acid methylester, 2-Aminobutane (aka sec-butylamine), 2-Benzyl-4-chlorophenol, 2-Phenylphenol (incl. sodium salt orthophenyl phenol), 4-Chloro-3-methylphenol, 5-chloro-3-methyl-4-nitro-1H-pyrazole (CMNP), 8-Hydroxyquinoline incl. oxyquinoleine, Aldimorph, Alkyltrimethyl ammonium chloride, Ametoctradin, Amisulbrom, Ammonium carbonate, Ammonium hydroxyde, *Ampelomyces quisqualis* strain AQ10, Ampropylfos, Anilazine, *Aspergillus flavus* strain MUCL 54911, *Aureobasidium pullulans* (strains DSM 14940 and DSM 14941), Azaconazole, Azoxystrobin, *Bacillus amyloliquefaciens* (formerly *subtilis)* str. QST 713, *Bacillus amyloliquefaciens* FZB42, *Bacillus amyloliquefaciens* MBI 600, *Bacillus amyloliquefaciens strain* FZB24, *Bacillus amyloliquefaciens* subsp. *plantarum* D747, *Bacillus nakamurai* F727, *Bacillus pumilus* QST 2808, Barium polysulphide, Benalaxyl, Benalaxyl-M, Benodanil, Benomyl, Bentaluron, Benthiavalicarb, Benzoic acid, Benzovindiflupyr, Bis(tributyltin) oxide, Bitertanol, Bixafen, Blasticidin-S, Bordeaux mixture, Boscalid (formerly nicobifen), Brandol (hydroxynonyl-2,6-dinitrobenzene), Bromuconazole, Bronopol, Bupirimate, Calcium chloride, Calcium propionate, *Candida oleophila* strain O, Captan, Carbendazim, Carboxin, Carpropamide, Chinomethionat (aka quinomethionate), Chlobenthiazone, Chlorhydrate of poly(iminino imido biguanidine), Chlorine dioxide, Chloroneb, Chlorophylline, Chlorothalonil, Chlozolinate, Choline Phosphonate, *Clonostachys rosea* strain J1446 *(Gliocladium catenulatum* strain J1446), *Coniothyrium minitans* Strain CON/M/91-08 (DSM 9660), Copper hydroxide, Copper oxide, Copper oxychloride, Cresylic acid, Cufraneb, Cyazofamid, Cyflufenamid, Cymoxanil, Cyproconazole, Cyprodinil, Cyprofuram, Dazomet, Dichlofluanid, Dichlone, Dichlorophen, Diclobutrazol, Dicloran, Didecyldimethylammonium chloride, Diethofencarb, Difenoconazole, Dimethirimol, Dimethomorph, Dimethyl disulphide, Dimoxystrobin, Diniconazole-M, Dinobuton, Dinocap, Dioctyldimethyl ammonium chloride, Disodium phosphonate, Ditalimfos, Dithianon, DNOC, Dodemorph, Dodine, Drazoxolon, Epoxiconazole, Etaconazole, Ethaboxam, Ethirimol, Ethylhexanoate, Etridiazole, Eugenol, Extract from tea tree, Famoxadone, Fenamidone, Fenaminosulf, Fenarimol, Fenbuconazole, Fenfuram, Fenhexamid, Fenpiclonil, Fenpropidin, Fenpropimorph, Fenpyrazamine, Fentin acetate, Fentin hydroxide, Ferbam, florylpicoxamid, Fluazinam, Fludioxonil, Fluopicolide, Fluopyram, Fluoxapiprolin, Fluoxastrobin, Fluquinconazole, Flusilazole, Flusulfamide, Flutianil, Flutolanil, Flutriafol, Fluxapyroxad, Folpet, Formaldehyde, Fosetyl, Fuberidazole, Furalaxyl, Furconazole, Furmecyclox, Geraniol, Glutaraldehyde (aka glutardialdehyde), Guazatine, Hexachlorophene, Hexaconazole, Hydroxyphenyl-salicylamide, Hymexazol, Imazalil (aka enilconazole), Imibenconazole, Iminoctadine, Iprobenfos, Iprodione, Iprovalicarb, Isofetamid, Isoprothiolane, Isopyrazam, Isotianil, Kasugamycin, Kresoxim-methyl, L-Ascorbic acid, Lauryldimethylbenzylammonium bromide, Lecithin, Lime sulphur (calcium polysulphid), Lysate of Willaertia magna C2c Maky, Mancopper, Mancozeb, Mandestrobin, Mandipropamid, Maneb, Mepanipyrim, Mepronil, Meptyldinocap, Metalaxyl, Metalaxyl-M, Metam (incl. -potassium and -sodium), Metconazole, Methfuroxam, Methyl bromide, Methyl isothiocyanate, Methylenebisthiocyanate, Metiram, Metominostrobin, Metrafenone, Metsulfovax, Myclobutanil, Nabam, Nitrothal, Nonylphenol ethoxylate, Nuarimol, Octhilinone, Octyldecyldimethyl ammonium chloride, Ofurace, OptiCHOS, Orysastrobin, Oxadixyl, Oxine-copper, Oxpoconazole, Oxycarboxin, Pefurazoate, Penconazole, Pencycuron, Penflufen, Penthiopyrad, Petroleum oils, Picoxystrobin, Piperalin, Plant oils / Clove oil, Polyoxin, Potassium iodide, Potassium permanganate, Potassium phosphonates (formerly potassium phosphite), Potassium sorbate, Potassium thiocyanate, Potassium tri-iodide, Probenazole, Prochloraz, Procymidone, Propamocarb, Propiconazole, Propineb, Propionic acid, Proquinazid, Prothiocarb, Prothioconazole, Pseudomonas chlororaphis strain MA342, Pseudozyma flocculosa, Pyraclostrobin, Pyrazophos, Pyrifenox, Pyrimethanil, Pyriofenone, Pyroquilon, *Pythium oligandrum* M1, Quinoxyfen, Quintozene, Reynoutria sacchalinensis extract, *Saccharomyces cerevisiae* strain LAS02, Sedaxane, Silthiofam, Silver nitrate, Simeconazole, Sodium arsenite, Sodium dichlorophenate, Sodium dimethyldithiocarbamate, Sodium hydrogen carbonate (basic substance), Sodium lauryl sulfate, Sodium metabisulphite, Sodium o-benzyl-p-chlorphenoxide, Sodium propionate, Sodium p-t-amylphenate, Sodium p-t-amylphenoxide, Sodium tetrathiocarbonate, Spiroxamine, *Streptomyces* K61 (formerly S. *griseoviridis), Streptomyces lydicus* WYEC 108, Sulphur, TCMTB, Tebuconazole, Tecnazene, Tetraconazole, Thiabendazole, Thiophanate (ethyl), Thiophanate-methyl, Thiram, Thymol, Tiadinil, Tolclofos-methyl, Tolylfluanid, Triadimefon, Triadimenol, Triazbutyl, Triazoxide, Tribasic copper sulfate, *Trichoderma asperellum* (formerly *T. harzianum)* strains ICC012, T25 and TV1, *Trichoderma asperellum* strain T34, *Trichoderma atroviride* (formerly *T. harzianum)* strain T11 and IMI 206040, *Trichoderma atroviride* strain 1-1237, *Trichoderma atroviride* strain SC1, *Trichoderma gamsii* (formerly *T. viride)* strain ICC080, *Trichoderma harzianum* B97, *Trichoderma polysporum* strain IMI 206039, Tricyclazole, Tridemorph, Trifloxystrobin, Triflumizole, Triforine, Trioxymethylen, Triticonazole, Validamycin, Valifenalate (formerly Valiphenal), *Verticillium albo-atrum* (formerly *Verticillium dahliae*) strain WCS850, Vinclozolin, *Yucca Schidigera* extract, Zineb, Ziram, Zoxamide, Zucchini yellow mosaic virus - weak strain, Zucchini yellow mosaic virus (ZYMV mild strain), or a combination thereof.

In one particular embodiment, the composition further comprises at least one phytopharmaceutical antifungal agent against Botrytis strains, typically selected from the list consisting of *Aureobasidium pullulans* (strains DSM 14940 and DSM 14941), Aqueous extract from the germinated seeds of sweet *Lupinus albus,* Azoxystrobin, *Bacillus amyloliquefaciens* (formerly subtilis) str. QST 713, *Bacillus amyloliquefaciens* MBI 600, *Bacillus amyloliquefaciens* strain FZB24, *Bacillus amyloliquefaciens* subsp. *plantarum* D747, Boscalid (formerly nicobifen), *Clonostachys rosea* strain J1446 (Gliocladium catenulatum strain J1446), Cyprodinil, Difenoconazole, Eugenol, Fenhexamid, Fenpyrazamine, Fluazinam, Fludioxonil, Fluopyram, Fluxapyroxad, Geraniol, Imazalil (aka enilconazole), Isofetamid, Mepanipyrim, Metconazole, *Metschnikowia fructicola* strain NRRL Y-27328, Penthiopyrad, Potassium hydrogen carbonate, Pyrimethanil, *Saccharomyces cerevisiae* strain LAS02, Tebuconazole, Thymol, *Trichoderma atroviride* strain SC1, and Trifloxystrobin.

In one particular embodiment, the applied composition further comprises a plant defense molecule selected from brassinin, camalexin, resveratrol, 3,5-dihydroxybiphenyl, aucuparin, ε-viniferin and 6-methoxymellein.

Alternatively or additionally, the composition may further comprise an insecticide and/or an herbicide, as generally known in the art.

According to a first variant, the method for treating is a method for preventing, controlling and/or treating a fungal infection by a phytopathogenic fungal strain on a plant organ. In one embodiment, the method is for controlling and/or treating a fungal infection by a phytopathogenic fungal strain on a plant organ.

According to a second variant, the method for treating is a method for reducing the incidence a phytopathogenic infection meaning the decrease of the number on infected plant organs in a plant culture. In one embodiment, the method of the invention is for reducing the severity of a phytopathogenic infection, meaning the decrease of the percentage of the infected surface (*i.e.* decolorized or necrotic surface) relative to the total plant organ surface.

According to a third variant, the method for treating is a method for improving the growing characteristics of a plant organ The characteristics of a plant organ may be selected from the yield and/or vigour of the plant and/or the quality of the harvested product from the plant, or the root rating, or emergence, or protein content, or increased tillering, or bigger leaf blade, or less dead basal leaves, or stronger tillers, or less fertilizer needed, or less seeds needed, or more productive tillers, or earlier flowering, or early grain maturity, or less plant verse (lodging), or increased shoot growth, or earlier germination, or any combination of these factors, or any other advantages familiar to a person skilled in the art.

According to a fourth variant, the method for treating is a method for enhancing the efficacy and/or reducing the amount of a phytopharmaceutical antifungal agent and/or of an agent for stimulating the production of a plant defense molecule in a method for preventing, controlling or treating a fungal infection by a phytopathogenic fungal strain. According to such variant, the antifungal active agent and/or the agent for stimulating the production of a plant defense molecule may be selected from the lists detailed herein above. According to such variant, enhancing the efficacy may lead to a decrease of at least about 5 %, or at least about 10 % in the number/percentage of infected plant organs in the plant culture treated with the method of the invention, compared to the number/percentage of infected plant organs in a plant culture treated with the phytotherapeutically effective amount of the phytopharmaceutical antifungal agent alone.

One skilled in the art knows the phytopharmaceutically effective amount of one phytopharmaceutical antifungal agent or an agent for stimulating the production of a plant defense molecule which is often established by regulatory provisions. In one embodiment, preferably an embodiment of the fourth variant, the phytopharmaceutical antifungal agent is applied in a reduced amount that is a phytopharmaceutically sub-effective amount, which is at least 2 %, at least 5%, at least 8 %, at least 10 %, at least 12 %, at least 15 %, at least 18 %, at least 20 %, at least 22 %, at least 25 %, at least 28 %, or at least 30% inferior to the phytopharmaceutically effective amount of the antifungal agent or the agent for stimulating the production of a plant defense molecule.

In the context of the present invention "phytopathogenic fungi" or "phytopathogenic fungal strain (s)" refers to at least one fungal pathogen for plant organs (at least one phytopathogenic fungal strain). In one embodiment, the least one phytopathogenic fungal strain may be a biotroph, which depends on living tissue for feeding. In one embodiment, the least one phytopathogenic fungal strain may be hemibiotroph, which requires living tissue, but kills the host plant at some stage. In one embodiment, the least one phytopathogenic fungal strain may be necrotroph, which feeds on dead plant tissue.

Examples of phytopathogenic fungi include, but are not limited to, fungi belonging to the Ascomycetes and Basidiomycetes classes, such as, for example, fungi of the order of Erysiphales (such as, for example, family Erysiphaceae, genera Uncinula, Erysiphe, Sphaerotheca); fungi of the order of Dothideales (such as, for example, family Venturiaceae genus Venturia); fungi of the order of Helotiales (such as, for example, family Sclerotiniaceae, genera Sclerotinia, Monilia/Monilinia, Botrytis/ Botryotinia); fungi of the order of Taphrinales (such as, for example, family Taphrinaceae, genus Taphrina); fungi of the order of Pleosporales (such as, for example, family Pleosporaceae, genus Alternaria); fungi of the order of Magnaporthales (such as, for example, family Magnaportaceae genus Magnaporthe - Pyricularia); fungi of the order of Hypocreales (such as, for example, family Nectriaceae, genus Fusarium); fungi of the order of Uredinales (such as, for example, family Pucciniaceae, genus Puccinia); and fungi of the order of Ustilaginales (such as, for example, family Ustilaginaceae, genus Ustilago).

In one embodiment, the at least one pathogenic fungus is selected from the genera *Alternaria, Fusarium, Botrytis or Botryotinia, Sclerotinia, Dreschlera, Venturia, Hyaloperonospora, Plasmodiophora, Phoma, Erysiphe, Rhizoctonia, Pythium, Cercospora, Podosphaera, Gymnosporangium, Pythopthora, Plasmopara, Uncinula, Guignardia, Eutypa, Phomopsis, Botryosphaeria, Zymospetoria, Puccinia, Blumeria, Oculimacula, Gaeumannomyces, Pyrenophora, Phakospora, Septoria, Peronospora, Colletotrichum, Microsphaera, Corynespora, Helminthosporium, Pyricularia, Rhizoctonia, Sarocladium, Erythricium, Mycospharella, Urocystis, Monilinia, Taphrina, Cladosporium, Cytospora, Phomopsis, Cercosporidium, Phoma* and *Leptosphaerulina.*

In one embodiment, the at least one pathogenic fungus is selected from the genera *Alternaria* and/or *Botrytis.* In one specific embodiment, the at least one pathogenic fungus is selected from the group comprising *Alternaria brassicicola* and/or *Botrytis cinerea.*

In one embodiment, the plant organ is a plant organ of a Brassicaceae plant species such as cabbage or colza and the at least one pathogenic fungus is selected from the species selected from the group consisting of *Alternaria brassicicola, Sclerotinia sclerotiorium, Botrytis cinerea, Hyaloperonospora brassicae, Plasmodiophora brassicae, Phoma lingam, Fusarium oxysporum* f. sp. *conglutinans* and *Erysiphe cruciferarum.*

In one embodiment, the plant organ is a plant organ of an Apiaceae plant species such as *Daucus carotta* (carrot plant) and the at least one pathogenic fungus is selected from the species selected from the group consisting of *Alternaria dauci, Rhizoctonia* spp, *Pythium* spp., *Cercospora* spp, *Erysiphe* spp.

In one embodiment, the plant organ is a plant organ of a Rosaceae plant species such as *Malus domestica* (apple tree) or *Pyrus communis* (pear tree) and the at least one pathogenic fungus is selected from the species selected from the group consisting of *Venturia inaequalis, Podosphaera leucotricha, Gymnosporangium clavipes,* and *Phytophthora* spp.

In one embodiment, the plant organ is a plant organ of a Vitaceae plant species such as *Vitis vinifera* (common grape vine) and the at least one pathogenic fungus is selected from the species selected from the group consisting of *Plasmopara viticola, Uncinula necator, Botryotinia fuckelina (Botrytis cinerea), Guignardia bidwellii, Eutypa dieback, Phomopsis dieback, Botryosphaeria dieback* and the esca complex.

In one embodiment, the plant organ is a plant organ of a Solanaceae plant species such as *Solanum tuberosum* (potato) or *Solanum lycopersicum* (tomato) and the at least one pathogenic fungus is selected from the species selected from the group consisting of *Botrytis cinerea, Phytophthora infestans, Alternaria alternata, Erysiphae cichoracearum,* and *Alternaria solani.*

In one embodiment, the plant organ is a plant organ of a Vitaceae plant species such as *Vitis vinifera* (common grape vine) and the at least one pathogenic fungus is selected from the species selected from the group consisting of *Plasmopara viticola, Uncinula necator, Botryotinia fuckelina (Botrytis cinerea), Guignardia bidwellii, Eutypa dieback, Phomopsis dieback, Botryosphaeria dieback* and the esca complex.

In one embodiment, the plant organ is a plant organ of wheat species such as *Triticum aestivum* (Poaceae family) and the at least one pathogenic fungus is selected from the species selected from the group consisting of *Fusarium culmorum* and F. *graminearum, Zymoseptoria tritici* and *Septoria nodorum, Puccinia graminis, Puccina striiformis, Puccinia recondita, Blumeria graminis, Oculimacula yallundae, Oculimacula acuformis, Gaeumannomyces graminis var. tritici, Pyrenophora tritici-repentis* (telomorph) and *Drechslera tritici-repentis* (anamorph).

In one embodiment, the plant organ is a plant organ of a leguminous plants (Fabaceae family) such as soy *(Glycine max)* and the at least one pathogenic fungus is selected from the species selected from the group consisting of *Phakopsora pachyrhizi, Septoria glycines* (teleomorph *Mycosphaerella uspenskajae), Peronospora manshurica* (synonym *P. sojae), Cercospora sojina, Cercospora kikuchii., Alternaria* spp, *Colletotrichum truncatum and C. destructivum* (teleomorph *Glomerella glycines), Microsphaera diffusa* (synonyms: *Erysiphe polygoni and E. glycines), Corynespora cassiicola* (synonyms: *Cercospora melonis, C. vignicola, Helminthosporium vignae, and H. vignicola*).

In one embodiment, the plant organ is a plant organ of a Poaceae family plants such as rice *(Oryza* spp., *Zizania* spp.and *Porteresia* spp.) and the at least one pathogenic fungus is selected from the species selected from the group consisting of *Pyricularia oryzae* (Teleomorph stage *Magnaporthe oryzae), Deuteromycetes* spp., *Drechslera oryzae* (Synonym *Cochliobolus miyabeanus* - anamorph: *Bipolaris oryzae), Sclerotium oryzae, Rhizoctonia solani, Sarocladium oryzae,* and *Fusarium moniliforme.*

In one embodiment, the plant organ is a plant organ of a cacao tree *(Theobroma cacao)* and the at least one pathogenic fungus is selected from the species selected from the group consisting of *Phytophthora capsici, Phytophthora citrophthora, Phytophthora hevae, Phytophthora megakarya, Phytophthora palmivora, Erythricium salmonicolor,* and *Colletotrichum* spp.

In one embodiment, the plant organ is a plant organ of a banana plant *(Musa* spp.) and the at least one pathogenic fungus is selected from the species selected from the group consisting of *Mycospharella musicola, Mycospharella fifiensis, Fusarium oxysporum, Colletotrichum musae, Verticillium theobromae,* and *Trachyspaera fructigena.*

In one embodiment, the plant organ is a plant organ of an Alliaceae family plant such as onion *(Allium cepa*) or garlic *(Allium sativum)* and the at least one pathogenic fungus is selected from the species selected from the group consisting of *Peronospora destructor, Botrytis squamosa, Botrytis allii* and *Urocystis cepulac.*

In one embodiment, the plant organ is a plant organ of a drupaceous (stone fruit) plant such as almond, apricot, cherry, damson, peach, nectarine, and plum, and the at least one pathogenic fungus is selected from the species selected from the group consisting of *Monilinia fructicola, Taphrina deformans, Cladosporium carpophilum, Cytospora cincta* and C. *leucostoma.*

In one embodiment, the plant organ is a plant organ of a Rutaceae family plant (such as orange, citrus, lemon and grapefruit) and the at least one pathogenic fungus is selected from the species selected from the group consisting of *Mycosphaerella citri, Phomopsis citri,* and *Phytophthora* spp.

In one embodiment, the plant organ is a plant organ of peanut *(Arachis hypogaea)* and the at least one pathogenic fungus is selected from the species selected from the group consisting of *Cercosporidium personatum, Cercospora arachidicola, Phoma arachidicola,* and *Leptosphaerulina crassiasca.*

In one embodiment, the plant organ is a plant organ of a plant selected from the list consisting of apple, azalea, begonia, columbine, crabapple, crape myrtle, dogwood, euonymus, grape, hydrangea, lilac, magnolia, nandina, oak, phlox, rhododendron, rose, sedum, tulip tree, verbena, zinnia and the at least one pathogenic fungus is selected from the species, causing powdery mildiew (such as *Podosphaera* spp. *Erysiphe* spp. *Uncinula* spp or *Microsphaera* spp.).

In one embodiment, the plant organ is a plant organ of a plant selected from Alyssum, basil, brambles, coleus, grape, garden impatiens, pansy, and the at least one pathogenic fungus is selected from the species, causing downy mildiew (such as *Phytophthora infestans, Plasmopara* spp. or *Peronospora* spp.).

In one embodiment, the plant organ is a plant organ of a plant selected from apple, aster, azalea, cedar, crabapple, daylily, fuchsia, geranium, grasses, hawthorn, hemlock, hollyhock, iris, Jack-in-the-pulpit, juniper, mayapple, morning glory, oak, pear, pine, potentilla, quince, serviceberry, snapdragon, sunflower, and the at least one pathogenic fungus is selected from the species, causing rust (such as *Gymnosporangium nfestans* spp. *Puccinia* spp. or *Phakospora* spp).

In one embodiment, the plant organ is a plant organ of a plant selected from Aucuba, impatiens, marigold, zinnia; Boxwood, sweet box, pachysandra; Magnolia, maple; Buckeye, crape myrtle, hydrangea, leucothoe, laurel, phlox, red bud, rose, zinnia; Indian hawthorn, pear, photina, cleyera; Holly, magnolia, maple, witch hazel; Dogwood, and the at least one pathogenic fungus is selected from the species, causing leaf spot disease such as *Alternaria* leaf spot, Boxwood blight, bull's eye leaf spot, *Cercospora* leaf spot, *Entomosporium* leaf spot, *Phyllosticta* leaf spot, or *Septoria* leaf spot.

In one embodiment, the plant organ is a plant organ of a plant selected from Scots pine, Eastern white pine; Loblolly pine; Spruce; Juniper; juniper, Leyland cypress; Austrian pine, and the at least one pathogenic fungus is selected from the species, causing Needle Cast and/or Tip Blights diseases such as *Cyclaneusma* needle cast, *Lophodermium needle cast, Ploioderma* needle cast, *Rhizosphaera* needle cast *and Stigmina* needle cast *Phomopsis* blight, *kabatina* blight, or *Dothistroma* blight.

In one specific embodiment, the fungal strains belonging to the genus Alternaria are selected from *Alternaria alternata, A. alternantherae, A. arborescens, A. arbusti, A. blumeae, A. brassicae, A. brassicicola, A. burnsii, A. carotiincultae, A. carthami, A. celosiae, A. cinerariae, A. citri, A. conjuncta, A. cucumerina, A. dauci, A. dianthi, A.* *dianthicola, A. eichhorniae, A. euphorbiicola, A. gaisen, A. helianthi, A. helianthicola, A. hungarica, A. infectoria, A. japonica, A. limicola, A. linicola, A. longipes, A. molesta, A. panax, A. perpunctulata, A. petroselini, A. porri, A. radicina, A. raphani, A. saponariae, A. selini, A. senecionis, A. solani, A. smyrnii, A. tenuissima, A. triticina* and A. *zinnia.*

In one specific embodiment, the at least one pathogenic fungus is selected from the group comprising *Alternaria brassicicola, Botrytis cinerea, Alternatria dauci* and *Venturia inaequalis.*

In one specific embodiment, the phytopathogenic fungi are pathogens of plants belonging to the clade of Angiosperms, preferably to the clade of Eudicots, more preferably to the clade of Rosids, even more preferably to the order of Brassicales and even more preferably to the family of Brassicacae, also referred as Crucifers family. Examples of plants from the Brassicacae family include, but are not limited to, *Brassica carinata, Brassica juncea, Brassica oleracea, Brassica napus, Brassica nigra* and *Brassica rapa.*

In one specific embodiment, the phytopathogenic fungi are pathogens of plants selected from the list comprising plants of the Brassicacae family, such as, for example, *Brassica oleracea;* plants of the Apiaceae family, such as, for example, *Daucus carota* subsp. *Sativus;* plants of the Vitaceae family, such as, for example, *Vitis vinifera;* plants of the Rosaceae family, such as, for example, apple *(Malus domestica),* pears *(Pyrus comunis), Prunus* spp., in particular plums, cherries, peaches, nectarines, apricots, and almonds, plants of the Solanaceae family, such as, for example *Solanum tuberosum* or *Solanum lycopersicum,* plants of the Poaceae family, such as, for example wheat *(Triticum* spp.) or rice *(Oryza* spp., *Zizania* spp.and *Porteresia* spp), plants of the Fabaceae family, such as soy *(Glycine max).*

In one specific embodiment, the phytopathogenic fungi are pathogens of plants selected from the list comprising plants of the Brassicacae family, such as, for example, *Brassica oleracea;* plants of the Apiaceae family, such as, for example, *Daucus carota* subsp. *Sativus;* plants of the Vitaceae family, such as, for example, *Vitis vinifera;* or plants of the Rosaceae family, such as, for example, apple *(Malus domestica),* pears *(Pyrus comunis).*

In one specific embodiment, plant organ is a plant organ of the plants selected from the list comprising plants of the Brassicacae family, such as, for example, *Brassica oleracea;* plants of the Apiaceae family, such as, for example, *Daucus carota* subsp. *Sativus;* plants of the Vitaceae family, such as, for example, *Vitis vinifera;* plants of the Rosaceae family, such as, for example, apple *(Malus domestica),* pears *(Pyrus comunis), Prunus* spp., in particular plums, cherries, peaches, nectarines, apricots, and almonds, plants of the Solanaceae family, such as, for example *Solanum tuberosum* or *Solanum lycopersicum,* plants of the Poaceae family, such as, for example wheat *(Triticum* spp.) or rice *(Oryza* spp., *Zizania* spp.and *Porteresia* spp), plants of the Fabaceae family, such as soy *(Glycine max)* or peanuts *(Arachis hypogaea),* plants of the Musaceae family such as bananas *(Musa* spp), plants of the Alliaceae family, such as such as onion *(Allium cepa*) or garlic *(Allium sativum),* plants of the Rutaceae family, such as orange, citrus, lemon and grapefruit and plants of the Sterculiaceae family such as cacao tree ; and the at least one pathogenic fungus is selected from the genera *Alternaria, Fusarium, Botrytis or Botryotinia, Sclerotinia, Dreschlera, Venturia, Hyaloperonospora, Plasmodiophora, Phoma, Erysiphe, Rhizoctonia, Pythium, Cercospora, Podosphaera, Gymnosporangium, Pythopthora, Plasmopara, Uncinula, Guignardia, Eutypa, Phomopsis, Botryosphaeria, Zymospetoria, Puccinia, Blumeria, Oculimacula, Gaeumannomyces, Pyrenophora, Phakospora, Septoria, Peronospora, Colletotrichum, Microsphaera, Corynespora, Helminthosporium, Pyricularia, Rhizoctonia, Sarocladium, Erythricium, Mycospharella, Urocystis, Monilinia, Taphrina, Cladosporium, Cytospora, Phomopsis, Cercosporidium, Phoma* and *Leptosphaerulina.*

According to a second aspect, the invention relates to a composition, typically a phytopharmaceutical composition, comprising at least one UPR inhibitor as described in any one of the above embodiments in association with at least one phytopharmaceutical vehicle.

According to a third aspect, the invention relates to a kit-of-parts comprising:
- A first part comprising a composition comprising at least one UPR inhibitor as described in any one of the above embodiments,
- A second part comprising the at least one phytopharmaceutical vehicle, and optionally
- A third part comprising a composition comprising at least one PKc inhibitor as described above, and further optionally
- A fourth part comprising a composition comprising an agent for stimulating the production of a plant defense molecule as described above.

### BRIEF DESCRIPTION OF THE DRAWINGS

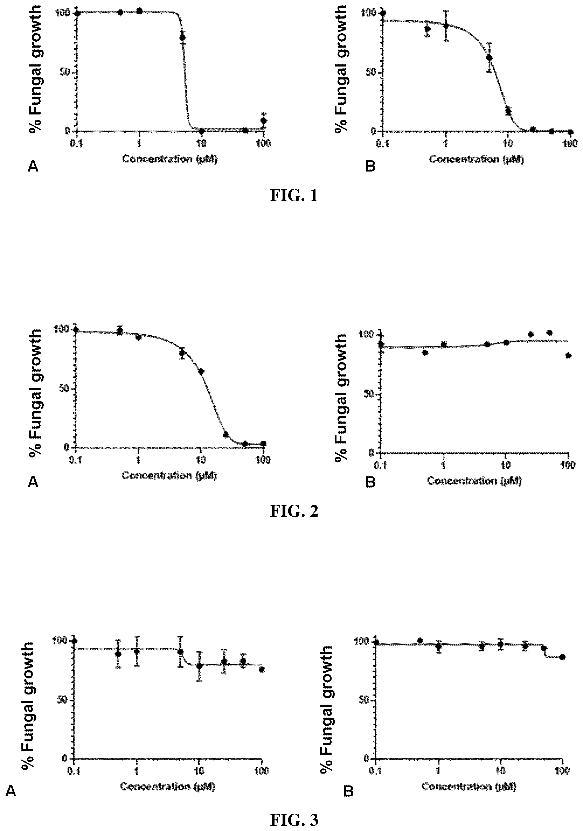

**Figure 1:** Figure 1A is a graph showing the inhibitory effect of DISA1 (3,5-diiodosalicylaldehyde) in the growth of *Alternaria brassicicola.* Figure 1B is a graph showing the inhibitory effect of DISA1 (3,5-diiodosalicylaldehyde) in the growth of *Botrytis cinerea.* The abscissa illustrates the assessed DISA1 concentrations. The ordinate illustrates the percentage of the fungal growth
**Figure 2:** Figure 2A is a graph showing the inhibitory effect of γ-mangostin in the growth of *Alternaria brassicicola.* Figure 2B is a graph showing the inhibitory effect of γ-mangostin in the growth of *Botrytis cinerea.* The abscissa illustrates the assessed DISA1 concentrations. The ordinate illustrates the percentage of the fungal growth.
**Figure 3:** Figure 3A is a graph showing the inhibitory effect of 1,3,5 trihydroxy-2-prenylxanthone in the growth of *Alternaria brassicicola.* Figure 3B is a graph showing the inhibitory effect of 1,3,5 trihydroxy-2-prenylxanthone in the growth of *Botrytis cinerea.* The abscissa illustrates the assessed 1,3,5 trihydroxy-2-prenylxanthone concentrations. The ordinate illustrates the percentage of the fungal growth.

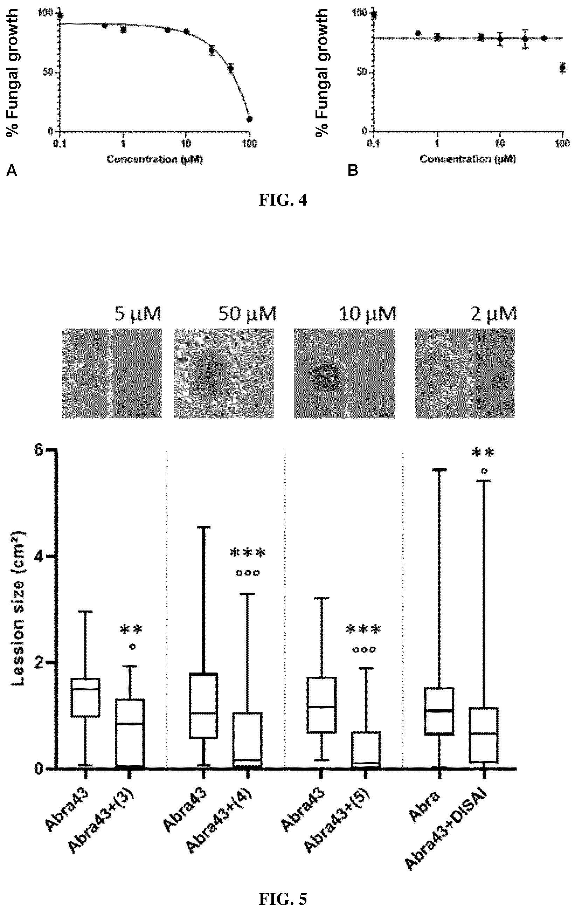

**Figure 4:** Figure 4A is a graph showing the inhibitory effect of 1,3,5 trihydroxy-4-prenylxanthone in the growth of *Alternaria brassicicola.* Figure 4B is a graph showing the inhibitory effect of 1,3,5 trihydroxy-4-prenylxanthone in the growth of *Botrytis cinerea.* The abscissa illustrates the assessed 1,3,5 trihydroxy-4-prenylxanthone concentrations. The ordinate illustrates the percentage of the fungal growth.
**Figure 5** is a graph combined with pictures illustrating the *in planta* effect of the invention against A. *brassicicola.* The graph (below) shows the necrotic areas in cm² by A *brassicicola* (Abra43, controls) compared with in the necrotic areas in cm² in the presence of an inhibitor of the UPR pathway: (Abra43+3) γ-mangostin (5µM), (Abra43+4) 1,3,5-trihydroxy-2-prenylxanthone (50µM), (Abra43+5) 1,3,5 -trihydroxy-4-prenylxanthone (10µM) and Abra43+DISA1 (2.5 µM). ^{∗}, ^{∗∗}, ^{∗∗∗} Indicate the significant difference with a p-value <0.05, <0.01, <0.001 respectively, obtained by the Wilcoxon test with paired data. °, °°, °°° Indicate the significant difference with a p-value <0.05, <0.01, <0.001 respectively, obtained by the Wilcoxon test with the unpaired data. The photographs (Figure 5, above) visually illustrate the comparison of the necrotic areas by A *brassicicola* (Abra43) the presence (right side of the leaf's central nerve) or not (control, left side of the leaf's central nerve) of an inhibitor of the UPR pathway as detailed in the graph.

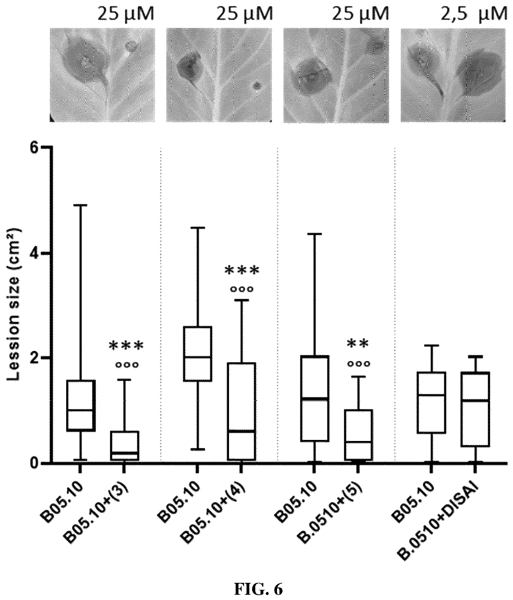

**Figure 6** is a graph combined with pictures illustrating the *in planta* effect of the invention against *B. cinerea.* The graph (below) shows the necrotic areas in cm² by *B. cinerea* (B05.10, controls) compared with in the necrotic areas in cm² in the presence of an inhibitor of the UPR pathway: (B05.10+3) γ-mangostin (5µM), (B05.10+4) 1,3,5-trihydroxy-2-prenylxanthone (50µM), (B05.10+5) 1,3,5 -trihydroxy-4-prenylxanthone (10µM) and B05.10+DISA1 (2.5 µM). ^{∗}, ^{∗∗}, ^{∗∗∗} Indicate the significant difference with a p-value <0.05, <0.01, <0.001 respectively, obtained by the Wilcoxon test with paired data. °, °°, °°° Indicate the significant difference with a p-value <0.05, <0.01, <0.001 respectively, obtained by the Wilcoxon test with the unpaired data. The photographs (Figure 6, above) visually illustrate the comparison of the necrotic areas by *B. cinerea* (B05.10) the presence (right side of the leaf's central nerve) or not (control, left side of the leaf's central nerve) of an inhibitor of the UPR pathway as detailed in the graph.

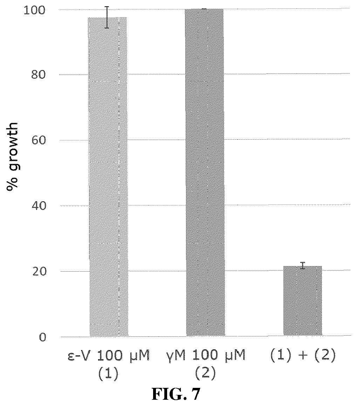

**Figure 7****:** is a graph showing *in vitro* the inhibitory effect of ε-viniferin (1: ε-V,100µM), γ-mangostin (2: γM, 100µM) and their combination (1+2) in the growth of *Botrytis cinerea* after 35 hours of incubation. The abscissa illustrates the above assessed conditions. The ordinate illustrates the percentage of the fungal growth inhbition.

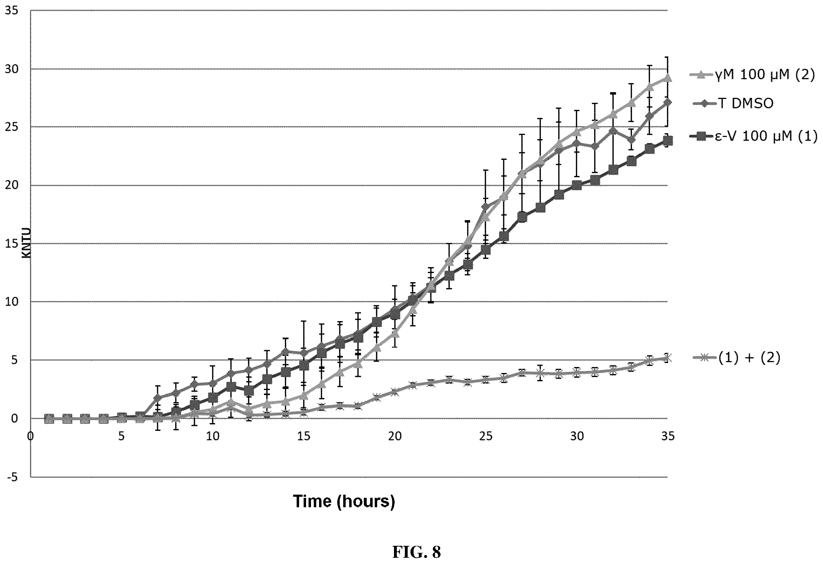

**Figure 8****:** is a graph showing the *in vitro* inhibitory effect of negative control (T, DMSO), ε -viniferin (1: ε-V,100µM), γ-mangostin (2: γM, 100µM) and their combination (1+2) in the growth of *Botrytis cinerea* during 35 hours of incubation. The abscissa presents time (hours). The ordinate illustrates the measured Nephelometric Turbity Units.

### EXAMPLES

The present invention is further illustrated by the following examples.

### Example 1: IRE1 inhibitors screening

A series of natural products were screened for their capacity to inhibit the UPR pathway via the inhibition of IRE1 in an *in vitro* screening test, based inhibition of the transcriptional activator HAC1 in *Saccharomyces cerevisiae* (the IRE1 protein is the 'sole effector of the UPR pathway in fungi).

**Table 1 presenting the results of the in vitro screening test**

| **Compound Class** | **N° CAS** | **Compound** | **µ(% activation) ± σ** |
|---|---|---|---|
| benzyltetrahydro isoquinoleines | 481-49-2 | Cepharantine | 102.2 ± 4,0 |
| | 436-05-5 | (-)-Curine | 100.0 ± 3,8 |
| | 518-94-5 | Cycleanine | 102.2 ± 1,9 |
| Benzophenanthridines | 34316-15-9 | Chelerythrine | 103.2 ± 3,6 |
| | 2447-54-3 | Sanguinarine | 91.1 ± 3,1 |
| Cularines | 87035-67-4 | Claviculine | 100.3 ± 2,5 |
| Pavines | 6901-16-2 | (-)-Argemonine | 102.6 ± 2,0 |
| | 5876-16-4 | (-)-Norargemonine | 101.7 ± 3,6 |
| Oxoaporphines | 58262-58-1 | Oxostephanine | 77.5 ± 0,9 |
| Protoberberines | 130-86-9 | Protopine | 99.0 ± 3,1 |
| | 17132-69-3 | Steponine | 103.4 ± 1,3 |
| | 84-39-9 | Stylopine | 101.4 ± 4,1 |
| | 2934-97-6 | Tétrahydropalmatine | 101.8 ± 4,8 |
| | 81701-50-0 | (±)-8-Oxotetrahydropalmatine | 99.6 ± 2,8 |
| Quinolizidines | 151757-06-1 | Anibacanine | 100.2 ± 3,6 |
| | 151851-38-6 | Pseudoanibacanine | 100.0 ± 3,7 |
| Diterpenes | 139628-86-7 | (-)-monomethylester-15 dehydropinifolic acid | 103.8 ± 1,1 |
| Sequiterpene lactones | 35730-78-0 | Cynaropicrin | 105.6 ± 0,7 |
| | 20554-84-1 | Parthenolide | 105.3 ± 1,1 |
| Triterpenes | 514-47-6 | Euphol | 105.3 ± 0,7 |
| | 559-74-0 | Friedelin | 104.6 ± 0,7 |
| | 227008-51-7 | (20*R*,23*E*)-Eupha-8,23-diene-3b,25-diol | 100.6 ± 2,5 |
| Triterpene lactones | 3649-76-1 | Ebelin lactone | 102.5 ± 0,9 |
| Terpenic Acids | 138-59-0 | Shikimic acid | 102.0 ± 6,2 |
| Phenolic Acids | 530-57-4 | Syringic acid | 97.8 ± 3,1 |
| Anthocyanes | 490-46-0 | Epicatechin | 101.4 ± 0,4 |
| Anthraquinones | 518-82-1 | Emodin | 104.5 ± 3,1 |
| Benzoquinones | 777862-54-1 | Tetraprenyltoluquinone | 100.8 ± 1,5 |
| | 490-91-5 | Thymoquinone | 104.3 ± 2,2 |
| Biflavonoids | 1617-53-4 | Amentoflavone | 101.8 ± 2,3 |
| | 27542-37-6 | (+)-Volkensiflavone | 95.8 ± 0,5 |
| Chalcone | 94530-80-0 | (+)-Lindératine | 103.0 ± 2,1 |
| Coumarins | 7380-40-7 | Bergamotine | 103.5 ± 1,6 |
| | 30563-62-3 | Mammea A/AA cycloF | 93.8 ± 1,1 |
| | 54947-82-9 | Mammea A/AC | 102.4 ± 1,7 |
| | 93-35-6 | Umbelliferone | 105.3 ± 2,3 |
| | 2107-76-8 | 5,7-dihydroxy-4-methyl coumarin | 104.0 ± 1,4 |
| Dihydrochalcone | 60-82-2 | Phloretin | 101.8 ± 1,7 |
| Cinnamic esters | 107843-77-6 | Benzyl caffeate | 104.6 ± 4,8 |
| | 115610-79-2 | Cinnamyl caffeate | 73.4 ± 1,7 |
| | 100884-13-7 | Prenyl caffeate | 102.4 ± 0,8 |
| Flavonoids | 480-40-0 | Chrysine | 91.7 ± 1,4 |
| | 548-82-3 | Pinobanksine | 101.5 ± 0,8 |
| | 480-41-1 | Naringenin | 101.1 ± 1,2 |
| | 52117-69-8 | Pinobanksine 3-O-acetate | 100.3 ± 2,7 |
| | 117-39-5 | Quercetin | 98.5 ± 1,4 |
| | 522-12-3 | Quercitrin | 102 ± 2,4 |
| | 14221-65-9 | 3,5-dihydroxy-6,7,8-trimethoxyflavone | 98.3 ± 2,4 |
| Lignans | 35354-74-6 | Honokiol | 93.9 ± 2 |
| | 40456-50-6 | Yatein | 100.7 ± 2,5 |
| Naphtoquinone | 481-39-0 | Juglone | 43.5 ± 3,7 |
| Polyphenol | 458-37-7 | Curcumine | 177.3 ± 10,3 |
| PPAP | 900501-08-8 | N-(3-Phenyl-n-propyl)-1-phenyl-2-aminopropane | 102.6 ± 1 |
| Proanthocyanidols | 29106-49-8 | Procyanidin B2 | 101.6 ± 1 |
| Xanthones | 439293-37-5 | Caledonixanthone K | 100.7 ± 2 |
| | 105037-93-2 | Calothwaitesixanthone | 104.6 ± 1,4 |
| | 155566-36-2 | Caloxanthone C | 104.2 ± 2,8 |
| | 112649-21-5 | Garcinon E | 101.6 ± 3,9 |
| | 33390-42-0 | Gartanin | 95.1 ± 5,5 |
| | 219649-95-3 | Griffipavixanthone | 96.8 ± 1,3 |
| | 199851-52-0 | Isocudraniaxanthone B | 94.3 ± 0,9 |
| | 55785-61-0 | Thwaitesixanthone | 101.1 ± 2,1 |
| | 6147-11-1. | α-mangostin | 67.5 ± 0,2 |
| | 20931-37-7 | β-mangostin | 100.3 ± 4,7 |
| | 31271-07-5 | γ-mangostin | 8.7 ± 5,5 |
| | 16302-46-8 | 1-methoxy-2-hydroxy-xanthone | 97.9 ± 3,6 |
| | 53377-61-0 | 1,3,5-trihydroxy-4-preny lxanthone | 70.9 ± 3,2 |
| | 20245-38-9 | 1,3,5-trihydroxy-2-preny lxanthone | 57.4 ± 4,9 |
| | 20245-39-0 | 1,3,7-trihydroxy-2-preny lxanthone | 89.7 ± 0,6 |
| | 5084-31-1 | 1,3,5,6-tétra-hydroxy-xanthone | 103.9 ± 0,7 |
| | 77182-02-6 | 2-Deprenyl-rheediaxanthone B | 97.3 ± 4,2 |
| | 129168-62-3 | 2,5,6,7,8-Pentahydroxyxanthone | 102.3 ± 0,7 |
| | 181307-40-4 | 5-O-methyl-2-deprenylrheediaxanthone B | 91.6 ± 3,3 |
| | 181307-38-0 | 5,6-O-dimethy1-2-deprenylrheediaxanthone | 100.3 ± 1,6 |
| | 33390-41-9 | 8-deoxygartanin | 96.6 ± 5,7 |
| | 35349-68-9 | 9-hydroxycalabaxanthone | 103.5 ± 2,8 |

Compounds leading to an IRE1 activity of less than 80% were retained as IRE1 inhibitors.

Juglone, cinnamyl caffeate, γ-mangostin, 1,3,5 trihydroxy-4-prenylxanthone, and 1,3,5 trihydroxy-2-prenylxanthone were found to inhibit IRE1 in a micromolar scale. DISA1 (3,5-diiodosalicylaldehyde, CAS N°2631-77-8), a well reported IRE1 inhibitor, was used as a positive control showing an IRE1 IC₅₀ of 2.6 µM.

Of interest γ-mangostin showed an IRE1 IC₅₀ of 7.3 µM, 1,3,5 trihydroxy-4-prenylxanthone showed an IRE1 IC₅₀ of 12.8 µM, juglone showed an IRE1 IC₅₀ of 12.8 µM and cinnamyl caffeate showed an IRE1 IC₅₀ of 21.6 µM. Lastly, demethylrubraxanthone was also found a to inhibit IRE1 (IC₅₀: 6.5 ± 0.4 µM).

Based on the above results, the capacity of a crude extract of *Garcinia mangostana* was assessed for its capacity to inhibit IRE1. Crushed *Garcinia mangostana* pericarps were twice extracted with a mixture of Ethyl Acetate: Ethanol (78:22, volume ratio) in a ultrasound bath at 20°C, yielding 12.5g of a dry *G. mangostana* crude extract. The average extraction yield was 12.5 g of crude extract per 100 g of Crushed *Garcinia mangostana* pericarps. The thin layer chromatography analysis of the crude extract indicated the presence of γ-mangostin, that was confirmed by NMR spectrometry

100 mg/L of the *Garcinia mangostana* pericarp crude extract lead a more than 90% inhibition of IRE1 (IC₅₀: 14.1 ± 1.8 mg/L). The amount of γ-mangostin in said extract was 25 µM.

### Example 2: Determination of the in vitro non-fungicidal concentration

### Materials and methods

For inoculum preparation, conidia of A. *brassicicola* or *B. cinerea* were collected from solid culture by adding water followed by gentle scraping of the agar plate. They were then counted in a Thoma's chamber and the conidial suspension was diluted to a final concentration of 106 conidia/mL in water. A volume of 100 µL of conidia suspension was added in 890 µL of PDB medium and completed with 10 µL of the compound prepared in DMSO. Concentrations of the assessed compounds varied from 0.1 µM to 100 µM. 300 µL of treated conidia were added in triplicate in each well of Greiner^{®} 96-well PS, F-Bottom, clear sterile microplate. Growth was monitored by nephelometric reader (NEPHELOstar Galaxy^{®}, BMG Labtech, Offenburg, Germany) at 25 °C, with orbital shaking 5 min before measurement for 33h. Turbidity was registered every 10 mins with a gain value of 75. Each well was measured during 0.1 s with a laser beam focus of 2.5 mm. A triplicate was realized for each condition. Area under the growth curve was determined by an Excel matrix developed in the lab. Area under the growth curve was normalized by area of positive control (filamentous fungi + DMSO less compound) and PDB medium to obtain a growth percentage.

The results are presented in Figures 1-4.

### Example 3: In planta effect of a non-fungicidal amount of the compound according to the invention

Example 3 discloses a protocol for determining the *in planta* efficacy of the composition of the invention, comprising a non-fungicidal amount of xanthones (C_{TP}), as determined in Example 2.

Based on the Example 2 results, the concentrations inducing a 50% inhibition of the fungal growth (MIG₅₀), the concentrations inducing at most 20% inhibition of the fungal growth (Cₘₐₓ)were calculated and presented in table 2. The retains non-fungicidal concentrations (C_{TP}) that were applied in planta were inferior to the MIG₅₀ and inferior or equal to the Cmax concentrations

**Table 2 presenting the MIG₅₀, Cₘₐₓ and CTP values of the in planta assessed compounds.**

| | *A. brassicicola* | | | *B.cinerea* | | |
|---|---|---|---|---|---|---|
| Compound | MIG₅₀ | C_{TP} | Cmax | MIG₅₀ | C_{TP} | Cmax |
| DISA1 | 5.3 ± 0.1 µM | 2 µM | 2 µM | 6.3 ± 0.7 µM | 2.5 µM | 2.5 µM |
| γ-mangostin, | 12.2 ± 0.2 µM | 5 µM | 5 µM | >>100 µM | 25 µM | 100 µM |
| 1,3,5 trihydroxy-2-prenylxanthone | >>100 µM | 50 µM | 100 µM | >>100 µM | 25 µM | 100 µM |
| 1,3,5 trihydroxy-4-prenylxanthone | 41.3 ± 3.7 µM | 10µM | 10µM | >>100 µM | 25 µM | 100 µM |

5 µL drops of A. *brassicicola* or *B. cinerea conidia* suspension (10⁵ to 10³ conidia/mL) were inoculated on prewounded (i.e wherein the synthesis of plant defense molecules such as Brassinin was naturally triggered by the aggression) leaves of *B oleracea cv Bartolo* plants at stages 4-6 leaves per plant. Inocula were deposited on the left and right sides symmetrically from the central vein: inocula comprising C_{TP} concentration the assessed compounds were deposited on the right side, and inocula comprising DMSO (negative control) were deposited on the left side. The plants were then maintained under saturated humidity (100% relative humidity). Symptoms were observed at day 6 post-infection. The necrotic surface area was calculated and compared between the left side (control) and right side (test condition) of the central vein.

The results are presented in Figure 5 and Figure 6 and in table 3. The significance of the measured efficacy was assessed with Wilcoxon's test.

**Table 3 presenting the in planta test results.**

| | Wilcoxon's Test | | | |
|---|---|---|---|---|
| | Linked data | | Unlinked data | |
| ***A. brassicicola*** | **n. of leaves** | **p-values** | **n. of leaves** | **p-values** |
| Control vs γ-mangostin (5 µM) | 16 | 0.0062 | 16 | 0.0288 |
| Control vs 1,3,5 trihydroxy-2-prenylxanthone (50 µM) | 34 | 2.3.10⁻⁵ | 34 | 0.0003 |
| Control vs 1,3,5 trihydroxy-4-prenylxanthone (10 µM) | 22 | 0.0002 | 23 | 4.8.10⁻⁵ |
| Control vs DISA1 (2 µM) | 30 | 0.0012 | 31 | 0.0198 |

| ***B. cinerea*** | **n. of leaves** | **p-values** | **n. of leaves** | **p-values** |
|---|---|---|---|---|
| Control vs γ-mangostin (25 µM) | 26 | 8.2.10⁻⁵ | 27/28 | 5.8.10⁻⁶ |
| Control vs 1,3,5 trihydroxy-2-prenylxanthone (25 µM) | 37 | 2.2.10⁻⁶ | 37/38 | 1.1.10⁻⁵ |
| Control vs 1,3,5 trihydroxy-4-prenylxanthone (25 µM) | 28 | 0.0089 | 31/29 | 0.0006 |
| Control vs DISA1 | 19 | 0.7086 | 22/21 | 0.5882 |

The results show that although at C_{TP} concentration that is inferior or equal to a the Cₘₐₓ concentration, the compounds do not exert a fungicidal effect *in vitro,* they surprisingly exert an antifungal effect in planta due to a potentiating effect of the plant's defense mechanisms.

### Example 4: In vitro effect of a non-fungicidal amount of the compound according to the invention

The anti-fungal effect against *B. cinera* of the plant defense molecule ε-viniferin (100µM), γ-mangostin (100µM) and their combination was assessed *in vitro* using the nephelometric protocol detailed in Example 2.

The results are presented in Figure 7 and Figure 8.

The results of Example 4 highlight the potentiating effect of γ-mangostin towards the antifungal effects of the plant defense molecule ε-viniferin.

## Claims

1. A method for preventing, controlling or treating a fungal infection by a phytopathogenic fungal strain on a plant organ, said method comprising the steps of applying on the plant organ a composition comprising at least one UPR (Unfolded Protein Response) inhibitor, preferably an IRE-1 (Inositol-Requiring Enzyme 1) inhibitor, in an in vitro sub-effective concentration being a concentration equal or inferior to a non-fungicidal concentration C1 of said inhibitor against the phytopathogenic fungal strain:
wherein the non-fungicidal concentration C1 is determined by comparing the growth of the phytopathogenic fungal strain cultures in contact with increasing concentrations of said at least one UPR inhibitor, with the growth of a control culture of the phytopathogenic fungal strain, in the absence of said at least one UPR inhibitor; the last concentration of the increasing concentrations of the at least one UPR inhibitor resulting in the same fungal culture growth as the control culture being retained as the non-fungicidal concentration C1 of said at least one UPR inhibitor.

2. The method according to claim **1,** wherein the at least one UPR inhibitor is at least one xanthone of formula I 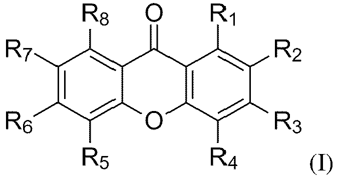 wherein each independently of R1-R8 is selected from H, OH, alkenyl, or *O*-β-D glucopyranose, with the proviso that at least one alkenyl moiety is in *ortho* position with at least one OH moiety.

3. The method according to claims **1** or **2,** wherein the at least one UPR inhibitor is selected from the group consisting of γ-mangostin, 1,3,5 trihydroxy-4-prenylxanthone, 1,3,5 trihydroxy-2-prenylxanthone and a mixture thereof,

4. The method according to any one of claims **1** to **3,** wherein the at least one UPR inhibitor is comprised in a *Garcinia mangostana* leaf, bark or pericarp extract.

5. The method according to any one of claims **1** to **4,** wherein the method further comprises applying on the plant organ at least one at least one PKc (Serine/Threonine Protein Kinase C) inhibitor, wherein the at least one at least one PKc inhibitor is applied simultaneously and/or sequentially to the composition comprising at least one UPR (Unfolded Protein Response) inhibitor.

6. The method according to claim **5,** wherein the at least one PKc inhibitor is in a sub-effective amount, said sub-effective amount being a concentration equal or inferior to a non-fungicidal concentration C2; wherein the non-fungicidal concentration C2 is determined by comparing the growth of the phytopathogenic fungal strain cultures in contact with increasing concentrations of said at least one PKc inhibitor, with the growth of a control culture of the phytopathogenic fungal strain, in the absence of said at least one PKc inhibitor; the last concentration of the increasing concentrations of the at least one PKc inhibitor resulting in the same fungal culture growth as the control culture being retained as the non-fungicidal concentration C2 of said at least one PKc inhibitor.

7. The method according to claim **5** or claim **6,** wherein the at least one PKc inhibitor is selected from the group consisting of chelerythrin, sanguinarin, berberin, coptisin and a mixture thereof.

8. The method according to any one of claims claim **5** to **7,** wherein the at least one PKc inhibitor is an extract of *Macleaya cordata.*

9. The method according to any one of claims **1** to **8,** wherein said fungal infection is an infection by a phytopathogenic fungus selected from the group consisting of the genera *Alternaria, Fusarium, Botrytis or Botryotinia, Sclerotinia, Dreschlera, Venturia, Hyaloperonospora, Plasmodiophora, Phoma, Erysiphe, Rhizoctonia, Pythium, Cercospora, Podosphaera, Gymnosporangium, Pythopthora, Plasmopara, Uncinula, Guignardia, Eutypa, Phomopsis, Botryosphaeria, Zymospetoria, Puccinia, Blumeria, Oculimacula, Gaeumannomyces, Pyrenophora, Phakospora, Septoria, Peronospora, Colletotrichum, Microsphaera, Corynespora, Helminthosporium, Pyricularia, Rhizoctonia, Sarocladium, Erythricium, Mycospharella, Urocystis, Monilinia, Taphrina, Cladosporium, Cytospora, Phomopsis, Cercosporidium, Phoma* and *Leptosphaerulina,* and/or wherein said plant organ is a plant organ of the Brassicacae, Apiaceae, Vitaceae, Rosaceae, Solanaceae, Fabaceae, Poaceae, Musaceae, Fabaceae, Alliaceae, Rutaceae and Sterculiaceae families.

10. The method according to any one of claims **1** to **9,** wherein the method further comprises applying on the plant organ simultaneously and/or sequentially to the composition comprising at least one UPR inhibitor, at least one agent for stimulating the synthesis of a plant defense molecule; said agent being selected from the group consisting of acibenzolar-S-methyl, chitosan, laminarin, *Reynoutria Sachalinensis* extract, calcium prohexadione, harpine, yeast wall extracts, oligogalacturonides, calcium phosphonate, disodium phosphonate 24-Epibrassinolide, ABE-IT 56 (Yeast Extract), Cerevisane, Chito-oligosaccharides, Oligogalacturonides, Heptamaloxyloglucan, Pepino mosaic virus strain CH2 isolate 1906, *Pythium oligandrum* strain B301 and a mixture thereof.

11. The method according to any one of claims **1** to **10,** wherein the composition further comprises at least synthetic or mineral phytopharmaceutical fungistatic or fungicide agent.

12. A phytopharmaceutical composition against a phytopathogenic fungal strain comprising at least one UPR (Unfolded Protein Response) inhibitor in a sub-effective amount, said sub-effective amount being a concentration equal or inferior to a non-fungicidal concentration of said inhibitor against the phytopathogenic fungal strain, in association with at least one phytopharmaceutical vehicle.

13. The phytopharmaceutical composition according to claim **12,** wherein the at least one UPR inhibitor is at least one xanthone of formula I 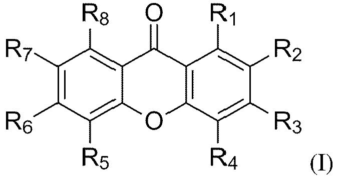 wherein each independently of R1-R8 is selected from H, OH, alkenyl, or *O*-β-D glucopyranose, with the proviso that at least one alkenyl moiety is in *ortho* position with at least one OH moiety; wherein the sub-effective amount is less than about 1000 ppm and/or less than or equal to 3.10 mM, preferably less than or equal to 2.52 mM, even more preferably less than or equal to 2.43 mM.

14. The phytopharmaceutical composition according to claim **12** or claim **13,** further comprising at least one PKc inhibitor selected from the group consisting of chelerythrin, sanguinarin, berberin, coptisin and a mixture thereof and/or at least one agent for stimulating the synthesis of a plant defense molecule; said agent being selected from the group consisting of acibenzolar-S-methyl, chitosan, laminarin, *Reynoutria Sachalinensis* extract, calcium prohexadione, harpine, yeast wall extracts, oligogalacturonides, calcium phosphonate, disodium phosphonate and a mixture thereof.

15. A kit-of-parts comprising a first part comprising at least one UPR (Unfolded Protein Response) inhibitor in a sub-effective amount as described in claim **12** or in claim **13,** a second part comprising least one phytopharmaceutical vehicle; and optionally a third part comprising at least one PKc inhibitor as described in claim **14** and/or a fourth part comprising at least one agent for stimulating the synthesis of a plant defense molecule as described in claim **14.**
